(19) Europäisches Patentamt
European Patent Office
Office européen des brevets

(11) Publication number: 0 264 169 B1

# (12) EUROPEAN PATENT SPECIFICATION

(45) Date of publication of the patent specification: 22.11.90

(51) Int. Cl.⁵: C08F 210/16

(21) Application number: 87305349.0

(22) Date of filing: 16.06.87

## (54) Process for producing ethylene-propylene copolymer rubber.

(30) Priority: 16.06.86 JP 138252/86
16.06.86 JP 138253/86
16.06.86 JP 138254/86

(43) Date of publication of application:
20.04.88 Bulletin 88/16

(45) Publication of the grant of the patent:
22.11.90 Bulletin 90/47

(84) Designated Contracting States:
BE DE FR GB IT NL SE

(56) References cited:
EP-A- 0 171 200
EP-A- 0 173 470
EP-A- 0 208 524

(73) Proprietor: Tonen Corporation,
1-1 Hitotsubashi, 1-Chome Chiyoda-Ku, Tokyo 100(JP)

(72) Inventor: Ueki, Satoshi, 4-7-301 Tate 2-chome, Shiki-shi Saitama-ken(JP)
Inventor: Furuhashi, Hiroyuki,
4-6 Nishitsurugaoka 1-chome Ooi-maci, Iruma-gun Saitama-ken(JP)
Inventor: Kusano, Yoshihisa, 1734-3 Ooaza Takahagi Hidaka-machi, Iruma-gun Saitama-ken(JP)
Inventor: Fukazawa, Nobuyuki,
4-4-436 Nishitsurugaoka 1-chome Ooi-machi, Iruma-gun Saitama-ken(JP)
Inventor: Maruyama, Kouji, 13-8 Chou 2-chome, Kamifukuoka-shi Saitama-ken(JP)
Inventor: Ueno, Hiroshi, 398-1 Ooaza Haneo Namegawa-machi, Hiki-gun Saitama-ken(JP)
Inventor: Mizukami, Haruo, 71 Higashifukai, Nagareyama-shi Chiba-ken(JP)

(74) Representative: Dew, Melvyn John et al, Exxon Chemical Limited Exxon Chemical Technology Centre P.O. Box 1, Abingdon Oxfordshire, OX13 6BB(GB)

EP 0 264 169 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a process for producing an ethylene-propylene copolymer rubber.

There is known a process for producing an ethylene-propylene copolymer rubber by copolymerizing ethylene and propylene with a high-activity titanium-based catalyst in place of the conventional vanadium-based catalyst.

Recently, several attempts are being made to produce said copolymer rubber with a titanium-based catalyst supported on a magnesium compound. However, the process involved is complex and the polymer obtained by the process has such a low bulk density that it is not of practical use.

On the other hand, there have been reported processes primarily for the production of polymers having good particle properties. They are produced by copolymerization, especially gas-phase polymerization, of ethylene and propylene using a catalyst component formed by supporting a titanium component on a metal oxide such as silica.

According to a disclosure in Japanese Patent Laid-open No. 105 008/1984, for example, the process employs a solid catalyst component formed by contacting (1) a metal oxide, (2) a reaction product of a magnesium halide and a compound represented by the formula $Me(OR)_nX_{z-n}$, (3) a silicon compound represented by the formula below

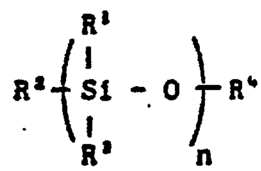

and (4) a titanium compound with one another. According to another disclosure in Japanese Patent Laid-open No. 230 011/1984, the process employs a catalyst formed by diluting a composition represented by the formula $Mg_mTi(OR)_nX_p(ED)_q$ (where X denotes a halogen and ED denotes an electron donor compound) with a metal oxide and activating the diluted composition with an organoaluminum compound.

The above-mentioned titanium-based catalyst supported on a metal oxide provides a copolymer which is improved to a certain extent in particle properties; however, it still has a disadvantage of forming the copolymer in a rather small quantity per unit weight thereof.

The present invention provides a process for producing an ethylene-propylene copolymer rubber containing 15-90 mol% of ethylene, wherein ethylene and propylene are copolymerized in the presence of a polymerization catalyst composed of a catalyst component and an organoaluminum compound, said catalyst component being obtained by contacting (A) a metal oxide, (B) a dihydrocarbyl magnesium, and (C) a hydrocarbyloxy group-containing compound with one another, contacting the thus obtained contact product with (D) a halogen-containing alcohol, and finally contacting the thus obtained contact product with (E) a titanium compound, and optionally (F) an electron donor compound. The titanium-containing component obtained after combining components (A) through (E) can also be advantageously subjected to an olefin prepolymerization in the presence of an olefin and an organoaluminum compound to form a prepolymer-titanium catalyst component preferably containing from about 0.1 to 100g of olefin polymer per gram of the titanium-containing component.

There is a desideratum to provide a process for producing in a good yield an ethylene-propylene copolymer rubber superior in particle properties by using a titanium-based catalyst supported on a metal oxide. The present invention may be practised by copolymerising ethylene and propylene with a catalyst component as disclosed in Japanese Patent Application No. 14 6805/1985. The catalyst component provides alpha-olefin polymers of high stereoregularity.

In the accompanying drawings

Figure 1 is a flowchart illustrating one embodiment of the present invention.

Figure 2 is a flowchart illustrating a second embodiment of the present invention.

Figure 3 is a flowchart illustrating a third embodiment of the present invention.

Raw Materials for the catalyst component

(A) Metal oxide

The metal oxide used in the present invention is preferably an oxide of a metal selected from the group of elements belonging to Groups II to IV of the periodic table. It includes, for example, $B_2O_3$, MgO, $Al_2O_3$, $SiO_2$, CaO, $TiO_2$, ZnO, $ZrO_2$, $SnO_2$, BaO, and $ThO_2$. Preferable among them are $B_2O_3$, MgO, $Al_2O_3$, $SiO_2$, $TiO_2$, and $ZrO_2$. Especially preferable is $SiO_2$. Additional examples of the metal oxides are complex oxides containing these metal oxides, for example, $SiO_2$-MgO, $SiO_2$-$Al_2O_3$, $SiO_2$-$TiO_2$, $SiO_2$-$V_2O_5$, $SiO_2$-$Cr_2O_3$, and $SiO_2$-$TiO_2$-MgO.

The above-mentioned metal oxides and complex oxides should preferably be anhydrous in principle. However, they may contain a very small amount of hydroxide which is usually present. In addition, they may contain impurities in such an amount that they do not considerably impair the properties of the metal oxides. The permissible impurities are oxides, carbonates, sulfates, and nitrates such as sodium oxide, potassium oxide, lithium oxide, sodium carbonate, potassium carbonate, calcium carbonate, magnesium carbonate, sodium sulfate, aluminum sulfate, barium sulfate, potassium nitrate, magnesium nitrate, and aluminum nitrate.

Usually these metal oxides are used in the form of powder. The particle size and shape of the powder should be properly controlled because they affect the form of the resulting olefin polymer. In addition, the metal oxide should preferably be calcined, prior to use, at as high a temperature as possible to remove poisonous substances, and the calcined metal oxide should be isolated from the atmosphere during handling.

(B) Dihydrocarbyl magnesium

The dihydrocarbyl magnesium (referred to as organo-Mg hereinafter) used in the present invention is preferably represented by the formula RMgR′, wherein R and R′ are identical or different alkyl, cycloalkyl, aryl, and aralkyl groups having 1 to 20 carbon atoms.

Examples of the organo-Mg include dimethyl magnesium (magnesium is abbreviated as Mg hereinafter), diethyl Mg, ethyl methyl Mg, dipropyl Mg, diisopropyl Mg, ethyl propyl Mg, dibutyl Mg, diisobutyl Mg, di-sec-butyl Mg, di-tert-butyl Mg, butyl ethyl Mg, butyl propyl Mg, sec-butyl ethyl Mg, tert-butyl isopropyl Mg, sec-butyl tert-butyl Mg, dipentyl Mg, diisopentyl Mg, ethyl pentyl Mg, isopropyl pentyl Mg, sec-butyl pentyl Mg, dihexyl Mg, ethyl hexyl Mg, butyl hexyl Mg, tert-butyl hexyl Mg, (2-ethylbutyl) ethyl Mg, (2,2-diethylbutyl) ethyl Mg, diheptyl Mg, dioctyl Mg, di-2-ethylhexyl Mg, didecyl Mg, dicyclohexyl Mg, cyclohexyl ethyl Mg, butyl cyclohexyl Mg, di(methylcyclohexyl) Mg, diphenyl Mg, ethyl phenyl Mg, butyl phenyl Mg, sec-butyl phenyl Mg, ditolyl Mg, ethyl tolyl Mg, dixylyl Mg, dibenzyl Mg, benzyl tert-butyl Mg, diphenetyl Mg, and ethyl phenetyl Mg.

These organo-Mg compounds may be used in the form of mixture or complex compound with an organic compound of other metals which may be represented by the formula $MR_n$ (wherein M denotes boron, beryllium, aluminum, or zinc; R denotes an alkyl, cycloalkyl, aryl, or aralkyl group having 1 to 20 carbon atoms; and n denotes the valence of the metal M). Their examples include triethyl aluminum, tributyl aluminum, triisobutyl aluminum, triphenyl aluminum, triethyl boron, tributyl boron, diethyl beryllium, diisobutyl beryllium, diethyl zinc, and dibutyl zinc.

Where the organo-Mg is used in the form of a mixture of complex compound with an organic compound of other metals, the amount of other metals is usually less than 5 gram atom, preferably less than 2 gram atom, for 1 gram atom of magnesium.

(C) Hydrocarbyloxy group-containing compound

The hydrocarboyloxy group-containing compound used in the present invention is preferably represented by the formula $R_qM(OR')_n$ (wherein R denotes a hydrogen atom or a hydrocarbon group having 1 to 20 carbon atoms; M denotes a silicon, carbon, phosphorus, boron, or aluminum atom; R′ denotes a hydrocarbon group having 1 to 20 carbon atoms; and $m > q \geqq 0$, $m \geqq n > 0$, and m denotes the valence of M).

Examples of the hydrocarbon group include alkyl groups such as methyl, ethyl, propyl, i-propyl, butyl, amyl, hexyl, octyl, 2-ethylhexyl, and decyl groups; cycloalkyl groups such as cyclopentyl, cyclohexyl, and methylcyclohexyl, groups; alkenyl groups such as allyl, propenyl, and butenyl groups; aryl groups such as phenyl, tolyl, and xylyl groups; and aralkyl groups such as phenetyl and 3-phenylpropyl groups. Preferable among them are alkyl groups having 1 to 10 carbon atoms, R and R′ may be identical or different.

Examples of these compounds are as follows: Compounds represented by the formula $Si(OR^1)_4$, such as $Si(OCH_3)_4$, $Si(OC_2H_4)_4$, $Si(OC_4H_9)_4$, $Si(Oi\text{-}C_4H_9)_4$, $Si(OC_6H_{13})_4$, $Si(OC_8H_{17})_4$, $Si[O \cdot CH_2CH(C_2H_5)C_4H_9)_4$, and $Si(OC_6H_5)_4$; compounds represented by the formula $RSi(OR^1)_3$ such as $HSi(OC_2H_5)_3$, $HSi(OC_4H_9)_3$, $HSi(OC_6H_{13})_3$, $HSi(OC_6H_5)_3$, $CH_3Si(OCH_3)_3$, $CH_3Si(OC_2H_5)_3$, $CH_3Si(OC_4H_9)_3$, $C_2H_5Si(OC_2H_5)_3$, $C_4H_9Si(OC_2H_5)_3$, $C_6H_5Si(OC_2H_5)_3$, and $C_2H_5Si(OC_6H_5)_3$; compounds represented by the formula $R_2Si(OR^1)_2$ such as $(CH_3)_2Si(OCH_3)_2$, $(CH_3)_2Si(OC_2H_5)_2$, $(CH_3)_2Si(OC_3H_7)_2$, $(C_2H_5)_2Si(OC_2H_5)_2$, and $(C_6H_5)_2Si(OC_2H_5)_2$; compounds represented by the formula $R_3SiOR^1$ such as $(CH_3)_3SiOCH_3$, $(CH_3)_3SiOC_2H_5$, $(CH_3)_3SiOC_4H_9$, $(CH_3)_3SiOC_6H_5$, $(C_2H_5)_3SiOC_2H_5$, and $(C_6H_5)_3SiOC_2H_5$; compounds represented by the formula $(COR^1)_4$ such as $C(OCH_3)_4$, $C(OC_2H_5)_4$, $C(OC_4H_9)_4$, $C(OC_6H_{13})_4$, $C(OC_8H_{17})_4$, and $C(OC_6H_5)_4$; compounds represented by the formula $RC(OR^1)_3$ such as $HC(OCH_3)_3$, $HC(OC_2H_5)_3$, $HC(OC_3H_7)_3$, $HC(OC_4H_9)_3$, $HC(OC_6H_{13})_3$, $HC(OC_8H_{17})_3$, $HC(OC_6H_5)_3$, $CH_3C(OCH_3)_3$, $CH_3C(OC_2H_5)_3$, and $C_2H_5C(OC_2H_5)_3$; compounds represented by the formula $R_2C(OR^1)_2$ such as $CH_3CH(OCH_3)_2$, $CH_3CH(OC_2H_5)_2$, $CH_2(OCH_3)_2$, $CH_2(OC_2H_5)_2$, and $C_6H_5CH(OC_2H_5)_2$; compounds represented by the formula, $P(OR^1)_3$ such as $P(OCH_3)_3$, $P(OC_2H_5)_3$, $P(OC_4H_9)_3$, $P(OC_6H_{13})_3$, and $P(OC_6H_5)_3$; compounds represented by

the formula $B(OR^1)_3$ such as $B(OC_2H_5)_3$, $B(OC_4H_9)_3$, $B(OC_6H_{13})_3$, and $B(OC_6H_5)_3$; and compounds represented by the formula $Al(OR^1)_3$ such as $Al(OC_3)_3$, $Al(OC_2H_5)_3$, $Al(OC_3H_7)_3$, $Al(Oi\text{-}C_3H_7)_3$, $Al(OC_4H_9)_3$, $Al(Ot\text{-}C_4H_9)_3$, $Al(OC_6H_{13})_3$, and $Al(OC_6H_5)_3$.

(D) Halogen-containing alcohol

The halogen-containing alcohol used in the present invention is preferably a monohydric alcohol having one hydroxyl group in one molecule or a polyhydric alcohol having two or more hydroxyl groups in one molecule, with one or more arbitrary hydrogen atoms other than that of the hydroxyl group replaced by halogen atoms. The halogen atoms are chlorine, bromine, iodine, and fluorine atoms, with chlorine atoms being preferable.

Examples of the halogen-containing compound include 2-chloroethanol, 1-chloro-2-propanol, 3-chloro-1-propanol, 1-chloro-2-methyl-2-propanol, 4-chloro-1-butanol, 5-chloro-1-pentanol, 6-chloro-1-hexanol, 3-chloro-1,2-propanediol, 2-chlorocyclohexanol, 4-chlorobenzhydrol, (m,o,p)-chlorbenzyl alcohol, 4-chlorocatechol, 4-chloro-(m,o)-cresol, 6-chloro-(m,o)-cresol, 4-chloro-3,5-dimethylphenol, chlorohydroquinone, 2-benzyl-4-chlorophenol, 4-chloro-4-naphthol, (m,o,p)-chlorophenol, p-chloro-α-methylbenzyl alcohol, 2-chloro-4-phenylphenol, 6-chlorothymol, 6-chlororesorcin, 2-bromoethanol, 3-bromo-1-propanol, 1-bromo-2-propanol, 1-bromo-2-butanol, 2-bromo-p-cresol, 1-bromo-2-naphthol, 6-bromo-2-naphthol, (m,o,p)-bromophenol, 4-bromoresorcin, (m,o,p)-fluorophenol, p-iodophenol, 2,2-dichloroethanol, 2,3-dichloro-1-propanol, 1,3-dichloro-2-propanol, 3-chloro-1-(a-chloromethyl)-1-propanol, 2,3-dibromo-1-propanol, 1,3-dibromo-2-propanol, 2,4-dibromophenol, 2,4-dibromo-1-naphthol, 2,2,2-trichloroethanol, 1,1,1-trichloro-2-propanol, β,β,β-trichloro-tert-butanol, 2,3,4-trichlorophenol, 2,4,5-trichlorophenol, 2,4,6-trichlorophenol, 2,4,6-tribromophenol, 2,3,5-tribromo-2-hydroxytoluene, 2,3,5-tribromo-4-hydroxytoluene, 2,2,2-trifluoroethanol, α,α,α-trifluoro-m-cresol, 2,4,6-triiodophenol; 2,3,4,6-tetrachlorophenol, tetrachlorohydroquinone, tetrachlorobisphenol A, tetrabromobisphenol A, 2,2,3,3-tetrafluoro-1-propanol, 2,3,5,6-tetrafluorophenol, and tetrafluororesorcin.

(E) Titanium compound

The titanium compound is a divalent, trivalent, or tetravalent titanium compound. Their examples include titanium tetrachloride, titanium tetrabromide, trichloroethoxytitanium, trichlorobutoxytitanium, dichlorodiethoxytitanium, dichlorodibutoxytitanium, dichlorodiphenoxytitanium, chlorotriethoxytitanium, chlorotributoxytitanium, tetrabutoxytitanium, and titanium trichloride. Preferable among them are tetravalent titanium halides as titanium tetrachloride, trichloroethoxytitanium, dichlorodibutoxytitanium, and dichlorodiphenoxytitanium. Particularly preferable is titanium tetrachloride.

(F) Electron donor compound

The electron donor compound includes carboxylic acides, carboxylic acid anhydrides, carboxylic acid esters, carboxylic acid halides, alcohols, ethers, ketones, amines, amides, nitriles, aldehydes, alcoholates, phosphamides, thioethers, thioesters, carbonic acid esters, and compounds of phosphorus, arsenic, or antimony attached to an organic group through a carbon or oxygen atom. Preferable among them are carbocylic acids, carboxylic acid anhydrides, carboxylic acid esters, carbocylic acid halides, alcohols, and ethers.

Examples of the carboxylic acids include aliphatic monocarboxylic acids such as formic acid, acetic acid, propionic acid, butyric acid, isobutyric acid, valeric acid, caproic acid, privalic acid, acrylic acid, methacrylic acid, and crotonic acid; aliphatic dicarboxylic acids such as malonic acid, succinic acid, glutaric acid, adipic acid, sebacic acid, maleic acid, and fumaric acid; aliphatic hydroxycarboxylic acids such as tartaric acid; alicyclic carboxylic acids such as cyclohexane monocarboxylic acid, cyclohexene monocarboxylic acid, cis-1,2-cyclohexane dicarboxylic acid, and cis-4-methylcyclohexene-1,2-dicarboxylic acid; aromatic monocarboxylic acids such as benzoic acid, toluic acid, anisic acid, p-tertiary-butylbenzoic acid, naphthoic acid, and cinnamic acid; and aromatic polybasis carboxylic acids such as phthalic acid, isophthalic acid, terephthalic acid, naphthalic acid, trimellitic acid, hemimellitic acid, trimesic acid, pyromellitic acid, and mellitic acid.

The carboxylic acid anhydrides that can be used in the present invention include the anhydrides of the above-mentioned carboxylic acids.

The carboxylic acid esters that can be used in the present invention include monoesters and polyesters of the above-mentioned carboxylic acids. Their examples include butyl formate, ethyl acetate, butyl acetate, isobutyl isobutyrate, propyl pivalate, isobutyl pivalate, ethyl acrylate, methyl methacrylate, ethyl methacrylate, isobutyl methacrylate, diethyl malonate, diisobutyl malonate, diethyl succinate, dibutyl succinate, diisobutyl succinate, diethyl glutarate, dibutyl glutarate, diisobutyl glutarate, diisobutyl adipate, dibutyl sebacate, diisobutyl sebacate, diethyl maleate, dibutyl maleate, diisobutyl maleate, monomethyl fumarate, diethyl fumarate, diisobutyl fumarate, diethyl tartrate, dibutyl tartrate, diisobutyl tartrate, ethyl cyclohexanecarbonate, methyl benzoate, ethyl benzoate, methyl p-toluylate, ethyl p-tertiary-

butylbenzoate, ethyl p-anisate, ethyl α-naphthoate, isobutyl α-naphthoate, ethyl cinnamate, monomethyl phthalate, monobutyl phthalate, dibutyl phthalate, diisobutyl phthalate, dihexyl phthalate, dioctyl phthalate, di-2-ethyl-hexyl phthalate, diaryl phthalate, diphenyl phthalate, diethyl isophthalate, diisobutyl isophthalate, diethyl terephthalate, dibutyl terephthalate, diethyl naphthalate, dibutyl naphthalate, triethyl trimellitate, tributyl trimellitate, tetramethyl pyrotrimellitate, tetraethyl pyrotrimellitate, and tetrabutyl pyromellitate.

The carboxylic acid halides that can be used in the present invention include the halides of the above-mentioned carboxylic acids. Their examples include acetic acid chloride, acetic acid bromide, acetic acid iodide, propionic acid chloride, butyric acid chloride, butyric acid bromide, butyric acid iodide, pivalic acid chloride, pivalic acid bromide, acrylic acid chloride, acrylic acid bromide, acrylic acid iodide, methacrylic acid chloride, methacrylic acid bromide, methacrylic acid iodide, crotonic acid chloride, malonic acid chloride, malonic acid bromide, succinic acid chloride, succinic acid bromide, glutaric acid chloride, glutaric acid bromide, adipic acid chloride, adipic acid bromide, sebacic acid chloride, sebacic acid bromide, maleic acid chloride, maleic acid bromide, fumaric acid chloride, fumaric acid bromide, tartaric acid chloride, tartaric acid bromide, cyclohexane carboxylic acid chloride, cyclohexane carboxylic acid bromide, 1-cyclohexene carboxylic acid chloride, cis-4-methylcyclohexene carboxylic acid chloride, cis-4-methylcyclohexene carboxylic acid bromide, benzoyl chloride, benzoyl bromide, p-toluic acid chloride, p-toluic acid bromide, p-anisic acid chloride, p-anisic acid bromide, α-naphthoic acid chloride, cinnamic acid chloride, cinnamic acid bromide, phthalic acid dichloride, phthalic acid dibromide, isophthalic acid dichloride, isophthalic acid dibromide, terephthalic acid dichloride, and naphthalic acid dichloride. Additional usable compounds include monoalkylhalides of dicarboxylic acid such as adipic acid monomethylchloride, maleic acid monoethylchloride, maleic acid monomethylchloride, and phthalic acid butylchloride. The alcohols may be presented by the formula ROH,wherein R is an alkyl, alkenyl, cycloalkyl, aryl, or aralkyl group having 1 to 12 carbon atoms. Examples of the alcohols include methanol, ethanol, propanol, isopropanol, butanol, isobutanol, pentanol, hexanol, octanol, 2-ethylhexanol, cyclohexanol, benzyl alcohol, allyl alcohol, phenol, cresol, xylenol, ethylphenol, isopropylphenol, p-tert-butylphenol, and n-octylphenol. The ethers may be represented by the formula ROR′,wherein R and R′ are alkyl, alkenyl, cycloalkyl, aryl, or aralkyl groups each having 1 to 12 carbon atoms. R and R′ may be identical or different, and may also form a ring. Examples of the ethers include diethyl ether, diisopropyl ether, dibutyl ether, diisobutyl ether, diisoamyl ether, di-2-ethylhexyl ether, diallyl ether, ethylallyl ether, butylallyl ether, diphenyl ether, anisole, ethyl phenyl ether and tetrahydrofuran. Any one of the above-mentioned halogen-containing alcohols can also be used as the electron donor compound.

Preparation of catalyst component

The preparation of the catalyst component used in the present invention involves the steps of contacting a metal oxide (component A), an organo-Mg (component B), and a hydrocarbyloxy group-containing compound (component C) with one another, contacting the resulting contact product with a halogen-containing alcohol (component D), and further contacting the resulting contact product with a titanium compound (component E) or, in an alternative method, with a titanium compound (component E) and an electron donor compound (component F).

Contacting of components A, B, and C with one another

There are the following four methods for contacting components A, B, and C with one another.

(1) Components A and B are contacted with each other and the resulting contact product is contacted with component C.
(2) Components A and C are contacted with each other and the resulting contact product is contacted with component B.
(3) Components B and C are contacted with each other and the resulting contact product is contacted with component A.
(4) Components A, B, and C are contacted with one another simultaneously.

The above-mentioned contacting may be accomplished by mixing and stirring or mechanically copulverizing the three components in the presence or absence of an inert medium. Examples of the inert medium include hydrocarbons such as pentane, hexane, heptane, octane, decane, cyclohexane, benzene, toluene, and xylene; and halogenated hydrocarbons such as 1,2-dichloroethane, 1,2-dichloropropane, carbon tetrachloride, butyl chloride, isoamyl chloride, bromobenzene, and chlorotoluene. The contacting of components A,B and C with one another is usually performed at –20°C to +150°C eg. for 0.1 to 100 hours. Where the contacting involves heat generation, it may be performed in such a manner that the components are mixed little by little at a low temperature in the initial stage, and after the mixing of the entire components is complete, the temperature is raised and contacting is continued. At the interval between the contacting steps, the contact product may be washed with one of the above-mentioned inert media; however, in the case of the above-mentioned first and second methods, it is preferable not to wash the

contact product of the first two components before it is contacted with the third component. A preferred molar ratio of components A, B, and C is B/A = 0.01 to 10, C/A = 0.01 to 10, and C/B = 0.1 to 10.

The contacting of components A, B, and C produces a solid product (referred to as reaction product I hereinafter). If necessary, it may be washed with a proper cleaning agent, e.g., one of the above-mentioned inert media, before it undergoes the subsequent contacting steps.

Contacting of reaction product I with component D

The contacting may be accomplished by mixing and stirring or mechanically copulverizing them in the presence or absence of an inert medium. Contacting by mixing and stirring in the presence of an inert medium is preferable. One of the inert media used in the above-mentioned contacting of components A, B, and C may also be used.

The contacting of reaction product I with component D is usually performed at –20°C to +150°C for eg 0.1 to 100 hours. Where the contacting involves heat generation, it may be performed in such a manner that the components are mixed little by little at a low temperature in the initial stage, and after the mixing of all the components is complete, the temperature is raised and contacting is continued. A preferred molar ratio of component D to component B in reaction product I is 0.1 to 20, preferably 0.5 to 10.

The contacting of reaction product I with component D produces a solid product (referred to as reaction product II hereinafter). If necessary, it may be washed with a proper cleaning agent, e.g., one of the above-mentioned inert media, before it undergoes the subsequent contacting steps.

Contacting of reaction product II with component E (Method A)

Reaction product II is contacted with a titanium compound (component E) by mixing and stirring or mechanically copulverizing the two components in the presence or absence of an inert medium. Contacting by mixing and stirring in the presence or absence of an inert medium is preferable. Any one of the above-mentioned inert media can be used.

Contacting of reaction product II with components E and F (Method B)

Reaction product II is contacted with a titanium compound (component E) and an electron donor compound (component F) in the following three manners.

(1) Reaction product II and component E are contacted with each other and the resulting contact product is contacted with component F.

(2) Reaction product II and component F are contacted with each other and the resulting contact product is contacted with component E.

(4) Reaction product II, component E, and component F are contacted with one another simultaneously.

The above-mentioned contacting may be accomplished by mixing and stirring or mechanically copulverizing the components, i.e. two components (Reaction Product II and component E) for method A and three components for method B, in the presence or absence of an inert medium. Contacting by mixing and stirring in the presence or absence of an inert medium is preferable. Any one of the above-mentioned inert media can be used.

The contacting of reaction product II with components E (or with E and F) is usually performed at 0°C to 200°C for eg 0.1 to 100 hours in the case of mechanical copulverisation, and at 0°C to 200°C for eg 0.5 to 20 hours in the case of mixing and stirring. The amount of component E is preferably 0.005 to 10 gram mol, more preferably 1 to 50 gram mol, for 1 gram atom of magnesium in reaction product II. When used, the amount of component F is preferably 0.005 to 10 gram mol, more preferably 0.01 to 1 gram mol, for 1 gram atom of magnesium in reaction product II.

The contacting of reaction product II with component E may be performed twice or more in the same manner as mentioned above. If necessary, the previous contact product may be washed with an inert medium, and component E (and the medium) may be freshly added.

In the case where contacting with component E is performed twice or more, the intermediate contact product may be contacted with an inert hydrocarbon, halogenated hydrocarbon, or metal halide compound prior to the subsequent contacting.

The inert hydrocarbon that can be used may an aliphatic,alicyclic, or aromatic hydrocarbon. Their examples are n-hexane, methylhexane, dimethylhexane, ethylhexane, ethylmethylpentane, n-heptane, methylheptane, trimethylpentane, dimethylheptane, ethylheptane, trimethylhexane, trimethylheptane, n-octane, methyloctane, dimethyloctane, n-undecane, n-dodecane, n-tridecane, n-tetradecane, n-pentadecane, n-hexadecane, n-octadecane, n-nonadecane, n-eicosane, cyclopentane, cyclohexane, methylcyclopentane, cycloheptane, dimethylcyclopentane, methylcyclohexane, ethylcyclopentane, dimethylcyclohexane, ethylcyclohexane, cyclooctane, indan, n-butylcyclohexane, isobutylcyclohexane, adamantane, benzene, toluene, xylene, ethylbenzene, tetramethylbenzene, n-butylbenzene, isobutylbenzene, propyltoluene, decalin, and tetralin. The halogenated hydrocarbon that can be used may be a mono-or poly-halogen substituted saturated or unsaturated aliphatic, alicyclic, or aromatic hydrocarbon having 1 to 12 carbon atoms. Their examples derived from aliphatic compounds are methyl chloride, methyl bromide, methyl iodide, methylene chloride, methylene bromide, methylene iodide, chloroform, bromoform, iodoform, carbon tetrachloride, carbon tetrabromide, carbon tetraiodide, ethyl chloride, ethyl bromide, ethyl iodide, 1,2-dichloroethane, 1,2-dibromoethane, 1,2-diiodoethane, methylchloroform, methylbromoform, methyliodoform , 1,1,2-trichloroethylene, 1,1,2-tribromoethylene, 1,1,2,2-tetrachloroethylene, pentachloroethane, hexachloroethane, hexabromoethane, n-propyl chloride, 1,2-dichloropropane, hexachloropropylene, octachloropropane, decarbromobutane, and chlorinated paraffin. The examples derived from alicyclic compounds are chlorocyclopropane, tetrachlorocyclopentane, hexachloropentadiene, and hexachlorocyclohexane. The examples derived from aromatic compounds are chlorobenzene, bromobenzene, o-dichlorobenzene, p-dichlorobenzene, hexachlorobenzene, hexabromobenzene, benzotrichloride, and p-chlorobenzotrichloride. These compounds may be used individually or in combination with one another.

The metal halide compound, or the halide of an element selected from the group of elements belonging to Groups IIIa, IVa, and Va of the Periodic Table (called a metal halide hereinafter) includes the chloride, fluoride, bromide, and iodide of B, Al, Ga, In, Tl, Si, Ge, Sn, Pb, As, Sb, and Bi. Preferable among them are $BCl_3$, $BBr_3$, $BI_3$, $AlCl_3$, $AlBr_3$, $AlI_3$, $GaCl_3$, $GaBr_3$, $InCl_3$, $TlCl_3$, $SiCl_4$, $SnCl_4$, $SbCl_5$, and $SbF_5$.

Where the contacting with component E is performed twice or more, the intermediate contact product is contacted, if necessary, with an inert hydrocarbon, halogenated hydrocarbon, or metal halide (collectively referred to as component G hereinafter) in the interval between the preceding contact and the succeeding contact. This contacting is preferably performed at 0 to 200°C for eg 5 minutes to 20 hours,more preferably at 20 to 150°C for eg. 10 minutes to 5 hours. Where component G is a liquid substance, it should preferably be used in such an amount that contact product II is 1 to 1,000g per liter of component G. Where component G is a solid substance, it is preferable to use it in the form of solution. It should preferably be used in such an amount that the amount of contact product II is 0.01 to 100 g per g of component G.

After the contacting of contact product II with component E, the resulting contact product may be contacted further with component G in the same manner as mentioned above for the contacting with component G which is performed if necessary.

In an additional embodiment of this invention, the titanium-containing catalyst component, obtained by contacting contact product II with component E, can be subjected to a preliminary polymerization of an olefin in the presence of the titanium-containing catalyst component and an organoaluminum compound, to form a prepolymer-titanium catalyst component which preferably contains 0.1 to 100g of polyolefin per g of the titanium-containing catalyst component.

The usable organoaluminum compound is preferably represented by the formula $R_nAlX_{3-n}$ (wherein R is an alkyl or aryl group; X is a halogen atom, alkoxyl group, or hydrogen atom; and n is a number in the range of $1 \leq n \leq 3$). The examples are alkyl aluminum compounds having 1 to 18 carbon atoms, preferably 2 to 6 carbon atoms, such as trialkyl aluminum, dialkyl aluminum monohalide, monoalkyl aluminum dihalide, alkyl aluminum sesquihalide, dialkyl aluminum monoalkoxide, and dialkyl aluminum monohydride, and mixtures thereof and complex compounds thereof. The specific examples include trialkyl aluminum such as trimethyl aluminum, triethyl aluminum, tripropyl aluminum, triisobutyl aluminum, and trihexyl aluminum; dialkyl aluminum monohalide such as dimethyl aluminum chloride, diethyl aluminum chloride, diethyl aluminum bromide, diethyl aluminum iodide, and diisobutyl aluminum chloride; monoalkyl aluminum dihalide such as methyl aluminum dichloride, ethyl aluminum dichloride, methyl aluminum dibromide, ethyl aluminum dibromide, ethyl aluminum diiodide, and isobutyl aluminum dichloride; alkyl aluminum sesquihalide such as ethyl aluminum sesquichloride; dialkyl aluminum monoalkoxide such as dimethyl aluminum methoxide, diethyl aluminum ethoxide, diethnum phenoxide, dipropyl aluminum ethoxide, diisobutyl aluminum ethoxide, and diisobutyl aluminum phenoxide; and dialky aluminum hydride such as dimethyl aluminum hydride, diethyl aluminum hydride, dipropyl aluminum hydride, and diisobutyl aluminum hydride.

Preferable among these compounds are trialkyl aluminum compounds, particularly triethyl aluminum and triisobutyl aluminum. The trialkyl aluminum may be used in combination with other organoaluminum compounds such as commercially available diethyl aluminum chloride, ethyl aluminum dichloride, ethyl aluminum sesquichloride, diethyl aluminum ethoxide, and diethyl aluminum hydride, or a mixture thereof or a complex compound thereof.

Another organoaluminum compound that can be used is one in which two or more aluminum atoms are connected through an oxygen atom or nitrogen atom. Examples of such compounds are $(C_2H_5)_2AlOAl(C_2H_5)_2$,

$$(C_4H_9)AlOAl(C_4H_9)_2, \text{ and } (C_2H_5)_2Al\underset{\displaystyle C_2H_5}{\underset{|}{N}}Al(C_2H_5)_2.$$

The preliminary polymerization of an olefin may be performed batchwise or continuously or both. The amount of an olefin for preliminary polymerization is preferably 0.2 to 50 g, more preferably 0.5 to 20 g, per g of the titanium-containing catalyst component.

The suitable olefin is an a-olefin such as ethylene, propylene, 1-butene, 1-hexene, and 4-methyl-1-pentene. Ethylene is preferable for the formation of a highly crystalline polyolefin. Ethylene may be copolymerized with another a-olefine an amount less than 5 mol%. If the amount of preliminary polymerization is outside the above-mentioned range, the resulting catalyst component is poor in the activity of copolymerization and provides a copolymer having poor physical properties. The preliminary polymerization should be performed in an inert hydrocarbon so that the amount of preliminary polymerization is kept in the above-mentioned range and the resulting prepolymer-titanium catalyst component suits the bulk polymerization and gas-phase polymerization desirable for the copolymerization in the present invention. The inert hydrocarbon include aliphatic, alicyclic, and aromatic hydrocarbons such as propane, butane, pentane, hexane, heptane, octane, decane, kerosene, cyclohexane, benzene, toluene, and xylene.

Where the preliminary polymerization is performed in an inert hydrocarbon, the amount of the titanium-containing catalyst component is desirably 0.01 to 500 g, preferably 0.1 to 50 g, per liter of the hydrocarbon. The organoaluminum compound is preferably used in such an amount that the atomic ratio of aluminum/titanium is 0.01 to 500, particularly 0.5 to 100. The temperature of the preliminary polymerization is preferably lower than 80°C,more preferably from −10°C to +50°C. The preliminary polymerization may be performed under normal pressure, or under pressure if necessary. In addition, the preliminary polymerization may be performed in the presence of a molecular weight modifier such as hydrogen.

The catalyst component that is used in the present invention can be produced as mentioned above. The catalyst component thus produced may be washed, if necessary, with an inert hydrocarbon such as hexane, heptane, octane, cyclohexane, benzene, toluene, and xylene, followed by drying, if necessary.

Polymerization catalyst

The polymerization catalyst used in the present invention is a combination of the catalyst component obtained as mentioned above and an organoaluminum compound.

The usable organoaluminum compound is preferably represented by the formula $R_nAlX_{3-n}$ (wherein R is an alkyl or aryl group; X is a halogen atom, alkoxyl group, or hydrogen atom; and n is a number in the range of $1 \leqq n \leqq 3$). The examples are alkyl aluminum compounds having 1 to 18 carbon atoms, preferably 2 to 6 carbon atoms, such as trialkyl aluminum, dialkyl aluminum monohalide, monoalkyl aluminum di alkyl aluminum sesquihalide, dialkyl aluminum monoalkoxide, and dialkyl aluminum monohydride, and mixtures thereof and complex compounds thereof. The specific examples include trialkyl aluminum such as trimethyl aluminum, triethyl aluminum, tripropyl aluminum, triisobutyl aluminum, and trihexyl aluminium; dialkyl aluminum monohalide such as dimethyl aluminum chloride, diethyl aluminum chloride, diethyl aluminum bromide, diethyl aluminum iodide, and diisobutyl aluminum chloride; monoalkyl aluminum dihalide such as methyl aluminum dichloride, ethyl aluminum dichloride, methyl aluminum dibromide, ethyl aluminum dibromide, ethyl aluminum diiodide, and isobutyl aluminum dichloride; alkyl aluminum sesquihalide such as ethyl aluminum sesquichloride; dialkyl aluminum monoalkoxide such as dimethyl aluminium methoxide, diethyl aluminum ethoxide, diethyl aluminium phenoxide, dipropyl aluminum ethoxide, diisobutyl aluminum ethoxide, and diisobutyl aluminum phenoxide; and dialkyl aluminum hydride such as dimethyl aluminum hydride; diethyl aluminum hydride, dipropyl aluminum hydride, and diisobutyl aluminum hydride.

Preferable among these compounds are trialkyl aluminum compounds, particularly triethyl aluminum and triisobutyl aluminum. The trialkyl aluminum may be used in combination with other organoaluminum compounds such as commercially available diethyl aluminum chloride, ethyl aluminum dichloride, ethyl aluminum sesquichloride, diethyl aluminum ethoxide, and diethyl aluminum hydride, or a mixture thereof or a complex compound thereof.

Another organoaluminum compound that can be used is one in which two or more aluminum atoms are connected through an oxygen atom or nitrogen atom. Examples of such compounds are $(C_2H_5)_2AlOAl(C_2H_5)_2$,

$(C_4H_9)_2AlOAl(C_4H_9)_2$, and 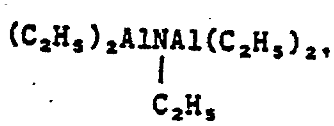,

The organoaluminum compounds may be used individually or in combination with an electron donor compound. The electron donor compound may be any compound which is used as component F in the preparation of the above-mentioned catalyst component. Other electron donor compounds that can be used include organosilicon compounds and those compounds containning a hetero atom such as nitrogen, sulfur, oxygen, and phosphorus.

Examples of the carboxylic acids include acetic acid, propionic acid, butyric acid, acrylic acid, methacrylic acid, succinic acid, adipic acid, maleic acid, benzoic acid, anisic acid, phthalic acid, isophthalic

acid, terephthalic acid, trimellitic acid, and pyromellitic acid. Examples of the carboxylic acid anhydrides include the anhydrides of the above-mentioned carboxylic acids. Examples of the carboxylic acid esters include ethyl acetate, butyl butyrate, ethyl acrylate, methyl methacrylate, ethyl methacrylate, diethyl malonate, diethyl succinate, diisobutyl succinate, diethyl maleate, methyl benzoate, ethyl benzoate, methyl p-toluylate, ethyl p-anisate, dibutyl phthalate, diisobutyl phthalate, and triethyl trimellitate. Examples of the carboxylic acid halides include acetic acid chloride, butyric acid chloride, pivalic acid chloride, acrylic acid chloride, methacrylic acid chloride, methacrylic acid bromide, succinic acid chloride maleic acid chloride, fumaric acid chloride, cyclohexane carboxylic acid chloride, benzoyl chloride, p-toluic acid chloride, p-anisic acid chloride, and phthalic acid dichloride. Examples of the alcohols include methanol, ethanol, isopropanol, butanol, octanol, cyclohexanol, benzyl alcohol, allyl alcohol, phenol, and ethylphenol. Examples of the ethers include diethyl ether, diisopropyl ether, dibutyl ether, dihexyl ether, diallyl ether, ethylallyl ether, diphenyl ether, and anisole. Examples of the ketones include acetone, methyl ethyl ketone, and methyl isobutyl ketone. Examples of the amines include monomethylamine, monoethylamine, diethylamine, trimethylamine, triethylamine, triethanolamine, and triphenylamine.

Examples of the organosilicon compounds include tetramethoxysilane, tetraethoxysilane, tetrabutoxysilane, tetraisobutoxysilane, tetraphenoxysilane, tetra-(p-methylphenoxy)silane, tetrabenzyloxysilane, methyltrimethoxysilane, methyltriethoxysilane, methyltributoxysilane, methyltriphenoxysilane, ethyltriethoxysilane, ethyltriisobutoxysilane, ethyltriphenoxysilane, butyltrimethoxysilane, butyltriethoxysilane, butyltributoxysilane, butyltriphenoxysilyane, isobutyltriisobutoxysilane, vinyltriethoxysilane, aryltrimethoxysilane, phenyltrimethoxysilane, phenyltriethoxysilane, benzyltriphenoxysilane, methyltriaryloxysilane, dimethyldimethoxysilane, dimethyldiethoxysilane, dimethyldiisopropoxysilane, dimethyldibutoxysilane, dimethyldihexyloxysilane, dimethyldiphenoxysilane, diethyldiethoxysilane, diethyldiisobutoxysilane, diethyldiphenoxysilane, dibutyldiisopropoxysilane, dibutyldibutoxysilane, dibutyldiphenoxysilane, diisobutyldiethoxysilane, diisobutyldiisobutoxysilane, diphenyldimethoxysilane, diphenyldiethoxysilane, diphenyldibutoxysilane, dibenzyldiethoxysilane, divinyldiphenoxysilane, diaryldipropoxysilane, diphenyldiaryloxysilane, methylphenyldimethoxysilane, and chlorophenyldiethoxysilane.

Examples of the electron donor compound containing a hetero atom are given below. Those which contain a nitrogen atom include 2,2,6,6-tetramethylpiperidine, 2,6-dimethylpiperidine, 2,6-diethylpiperidine, 2,6-diisopropylpiperidine, 2,2,5,5-tetramethylpyrrolidine, 2,5-dimethylpyrrolidine, 2,5-diethylpyrrolidine, 2,5-diisopropylpyrrolidine, 2-methylpyridine, 3-methylpyridine, 4-methylpyridine, 1,2,4-trimethylpiperidine, 2,5-dimethylpiperidine, methyl nicotinate, ethyl nicotinate, nicotinamide, benzoic amide, 2-methylpyrrole, 2,5-dimethylpyrrole, imidazole, toluylic amide, benzonitrile, acetonitrile, aniline, para- toluidine, orthotoluidine, metatoluidine, triethylamine, diethylamine, dibutylamine, tetramethylenediamine, and tributylamine. Those which contain a sulfur atom include thiophenol, thiophene, ethyl 2-thiophenecarboxylate, ethyl 3-thiophenecarboxylate, 2-methylthiophene, methylmercaptan, ethylmercaptan, isopropylmercaptan, butyl mercaptan, diethyl thioether, diphenyl thioether, methyl benzenesulfonate, methyl sulfite, and ethyl sulfite. Those which contain an oxygen atom include tetrahydrofuran, 2-methyltetrahydrofuran, 3-methyltetrahydrofuran, 2-ethyltetrahydrofuran, dioxane, dimethyl ether, diethyl ether, dibutyl ether, diisoamyl ether, diphenyl ether, anisole, acetophenone, acetone, methyl ethyl ketone, acetyl acetone, ethyl 2-furoate, isoamyl 2-furoate, methyl 2-furoate, and propyl 2-furoate. Those which contain a phosphorus atom include triphenyl phosphine, tributyl phosphine, triphenyl phosphite, tribenzyl phosphite, diethyl phosphate, and diphenyl phosphate.

Two or more kinds of the electron donor compounds may be used. They may be used when the catalyst component is combined with an organoaluminum compound or used after the contacting with an organoaluminum compound.

The organoaluminum compound is used usually in an amount of 1 to 2000 gram-mol, particularly 20 to 500 gram-mol, per gram-atom of titanium in the catalyst component of the present invention.

The amount of the organoaluminum compound is preferably 0.1 to 40 gram-atom, more preferably 1 to 25 gram-atom in terms of aluminum per mol of the electron donor compound.

The catalyst component used in the present invention may be in the form of combination with an ethylene polymer and/or propylene polymer formed by preliminary polymerization in the presence of an organo-aluminum compound and, if necessary, an electron donor compound. The amount of the polymer is preferably 0.1 to 100g, more preferably 1 to 50g, for 1g of the catalyst component. The preliminary polymerisation may be performed by the ordinary process for the polymerisation of olefins with a Ziegler-Natta catalyst.

Copolymerization of ethylene and propylene

The copolymerization of ethylene and propylene may be performed in the same way that ethylene and propylene are copolymerized with a common Ziegler-Natta catalyst. However, the preferred copolymerization process is the bulk polymerization that employs propylene as a medium and the gas-phase polymerization.

The copolymerisation is preferably performed at –80°C to +150°C, more preferably 0°C to 80°C, under a pressure up to 60 atm. The ethylene-propylene copolymer rubber obtained by the process of the present invention contains 15–90 mol% of ethylene. This ethylene content may be obtained when the ethylene/propylene molar ratio is 0.01-1.0 (in liquid phase) in the case of bulk polymerization in a medium of propylene or 0.03-3.0 in the case of gas-phase polymerization.

The copolymerization may be performed continuously or batchwise in one step or in two or more steps.

The process of the present invention generally provides in high yields an ethylene-propylene copolymer rubber having good particle properties, which does not need the step for removing the catalyst.

Examples

The invention is now described in more detail with reference to the following examples, which are not intended to limit the scope of the invention. Percent (%) in the examples means wt%, unless otherwise indicated.

The ethylene content in the polymer was determined by infrared spectrophotometry. Melt index (MI) was measured according to ASTM D1238, and bulk density was measured according to ASTM D1895-69, method A. Heat of fusion was measured with DSC IIc made by Perkin-Elmer Co., Ltd. True density was measured according to ASTM D1505.

Example 1

Preparation of catalyst component

(i) Contacting of silicon oxide with n-butyl ethyl magnesium

In a 200-ml flask equipped with a dropping funnel and stirrer, with the atmosphere therein replaced with nitrogen, were placed 5 g of silicon oxide (abbreviated as $SiO_2$ hereinafter) and 40 ml of n-heptane. (The silicon oxide is G-952, a product of DAVISON, having a specific surface area of 302 $m^2/g$, a pore volume of 1.54 $cm^3/g$, and an average pore radius of 204 A. Prior to use, it was calcined in a nitrogen stream at 200°C for 2 hours, and then at 700°C for 5 hours). Further, there was added 20 ml of 20% solution of n-butylethyl magnesium (abbreviated as BEM hereinafter) in n-heptane (MAGALA BEM, a product of Texas Alkyls, the solution containing 26.8 mmol of BEM), followed by stirring at 90°C for 1 hour.

(ii) Contacting with tetraethoxysilane

The resulting suspension was cooled to 0°C. To the cooled suspension was aded dropwise 20 ml of n-heptane solution containing 11.2 g (53.6 mmol) of tetraethoxysilane from the dropping funnel over 30 minutes. The reactants were slowly heated to 50°C over 2 hours, and stirring was continued at 50°C for 1 hour. After the completion of reaction, the supernatant liquid was removed by decantation. The resulting solid product was washed with 60 ml of n-heptane at room temperature, and the supernatant liquid was removed by decantation. The washing with n-heptane was repeated four times.

(iii) Contacting with 2,2,2-trichloroethanol

The solid product obtained in the above-mentioned step was suspended in 50 ml of n-heptane. To the resulting suspension was added a solution containing 8.0 g (53.6 mmol) of 2,2,2-trichloroethanol in 10 ml of n-heptane from a dropping funnel at 0°C over 30 minutes. The reactants were slowly heated to 60°C over 1 hour, and stirring was continued at 60°C for 1 hour. After the completion of reaction, the resulting solid product was washed twice with 60 ml of n-heptane and then three times with 60 ml of toluene. The resulting solid product (designated as solid component I) was found to contain 36.6% of $SiO_2$, 5.1% of magnesium, and 38.5% of chlorine. It was also found to have a specific surface area of 257 $m^2/g$ and a pore volume of 0.76 $cm^3/g$.

(iv) Contacting with di-n-butyl phthalate and titanium tetrachloride

To the solid component I obtained in the above-mentioned step were added 15 ml of toluene and 0.6 g of di-n-butyl phthalate, followed by reaction at 50°C for 2 hours. Then 40 ml of titanium tetrachloride was added, followed by reaction at 120°C for 2 hours. The supernatant liquid was removed by decantation and the solid product was washed with 60 ml of toluene at 120°C for 15 minutes. Washing with toluene was repeated. Further, 15 ml of toluene and 40 ml of titanium tetrachloride were added, followed by reaction at 120°C for 2 hours.

The resulting solid product was washed eight times with 60 ml of n-hexane at room temperature, followed by drying under reduced pressure at room temperature for 1 hour. There was obtained 8.3 g of catalyst component (a) containing 53.5% of $SiO_2$, 7.4% of magnesium, 24.6% of chlorine, and 2.7% of titanium.

(v) Copolymerization of ethylene and propylene

Into a 1.5-liter autoclave equipped with a stirrer, with the atmosphere therein replaced by nitrogen, were placed 800 ml of liquefied propylene, a glass ampoule containing 10 mg of catalyst component (a), and 10 mmol of triethyl aluminum (TEAL). While the contents are being heated to 40°C, 2 liters of hydrogen and ethylene sufficient to establish an ethylene-propylene molar ratio of 0.14 in the liquid phase were introduced under a pressure of 25.4 kg/cm$^2$. As the stirrer began to rotate, the glass ampoule was broken and copolymerization was initiated. During copolymerization, ethylene was supplied continuously so that the ethylene-propylene molar ratio was kept at 0.14. One hour later, the reaction system was depressured and the resulting polymer was discharged, followed by drying. The polymerization activity was 14.3 kg/g-catalyst component (a)-hour. The polymer thus obtained was in the form of spherical granules. It has the following characteristic properties.

Bulk density: 0.36 g/cm$^3$
Melt index: 0.26 g/10 min
True density: 0.878 g/cm$^3$
Ethylene content: 69 mol%
Heat of fusion: 3.6 cal/g

Examples 2 to 6

Copolymerization of ethylene and propylene was carried out in the same manner as in Example 1, except that the ethylene-propylene ratio and polymerization temperature were changed as shown in Table 1. The results are shown in Table 1.

Example 7

Copolymerization of ethylene and propylene was carried out in the same manner as in Example 1, except that TEAL was replaced by triisobutyl aluminum (TIBAL). The results are shown in Table 1.

Examples 8 to 11

Copolymerization of ethylene and propylene was carried out in the same manner as in Example 1, except that TEAL was replaced by a mixture of TEAL and phenyltriethoxysilane (PES) and the copolymerization conditions were changed as shown in Table 1. The results are shown in Table 1.

Examples 12 to 15

Preparation of catalyst component

Catalyst components (b) to (e) containing titanium as shown below were prepared in the same manner as in Example 1, except that the di-n-butyl phthalate was replaced by the electron donor compounds shown below.

| Example No. | Catalyst component | Electron donor compound | Titanium content (%) |
|---|---|---|---|
| 12 | (b) | Ethyl benzoate | 2.2 |
| 13 | (c) | Tetrahydrofuran | 2.1 |
| 14 | (d) | Anisole | 2.0 |
| 15 | (e) | p-Cresol | 2.8 |

Copolymerization of ethylene and propylene

Copolymerization of ethylene and propylene was performed in the same manner as in Example 1, except that the catalyst components mentioned above were used. The results are shown in Table 1.

Example 16

Preparation of catalyst component

Catalyst component (f) containing 3.3% of titanium was prepared in the same manner as in Example 1, except that the $SiO_2$ was replaced by $Al_2O_3$ formed by calcination in a nitrogen stream at 200°C for 2 hours and subsequently at 700°C for 5 hours.

Copolymerization of ethylene and propylene

Copolymerization of ethylene and propylene was performed in the same manner as in Example 1, except that the ethylene-propylene molar ratio was changed to 0.18. The results are shown in Table 1.

Examples 17 and 18

Preparation of catalyst component

Catalyst components (g) and (h) were prepared in the same manner as in Example 1, except that the BEM was replaced by the organo-Mg shown below.

| Example No. | Catalyst component | Organo-Mg | Titanium content (%) |
|---|---|---|---|
| 17 | (g) | di-n-hexyl Mg | 2.4 |
| 18 | (h) | di-n-butyl Mg (0.5 mol)-TEAL (1.0 mol) complex | 2.5 |

Copolymerization of ethylene and propylene

Copolymerization of ethylene and propylene was performed in the same manner as in Example 1, except that the catalyst components mentioned above were used and the copolymerization conditions were changed as shown in Table 1. The results are shown in Table 1.

Examples 19 and 20

Preparation of catalyst component

Catalyst components (i) and (j) were prepared in the same manner as in Example 1, except that the tetraethoxysilane was replaced by the hydrocarbyloxy group-containing compound shown below.

| Example No. | Catalyst component | Hydrocarbyloxy group-containing compound | Titanium content (%) |
|---|---|---|---|
| 19 | (i) | $C_6H_5Si(OC_2H_5)_3$ | 2.8 |
| 20 | (j) | $HC(OC_2H_5)_3$ | 2.6 |

Copolymerization of ethylene and propylene

Copolymerization of ethylene and propylene was performed in the same manner as in Example 1, except that the catalyst components mentioned above were used and the copolymerization conditions were changed as shown in Table 1. The results are shown in Table 1.

Examples 21 and 22

Preparation of catalyst component

Catalyst components (k) and (ℓ) were prepared in the same manner as in Example 1, except that the 2,2,2-trichloroethanol was replaced by the halogen-containing alcohol shown below.

| Example No. | Catalyst component | Halogen-containing alcohol | Titanium content (%) |
|---|---|---|---|
| 21 | (k) | 2-chloroethanol | 2.9 |
| 22 | (ℓ) | 2,4,6-trichloroethanol | 3.0 |

Copolymerization of ethylene and propylene

Copolymerization of ethylene and propylene was performed in the same manner as in Example 1, except that the catalyst components mentioned above were used and the copolymerization conditions were changed as shown in Table 1. The results are shown in Table 1.

Example 23

Preliminary polymerization of propylene

In a 200-ml flask equipped with a stirrer, with the atmosphere therein replaced with nitrogen, were placed 100 ml of n-heptane, 1 g of catalyst component (a), 0.1 mmol of TEAL, and 0.01 mmol of PES. Propylene was introducd into the system with stirring, and preliminary polymerization was performed at room temperature. The sold phase was washed five times with 50 ml of n-hexane, followed by drying at room temperature. Polymerization of 2.5 g of propylene per g of catalyst component (a) took place.

Copolymerization of ethylene and propylene

Copolymerization of ethylene and propylene was performed in the same manner as in Example 1, except that the above-mentioned catalyst component with preliminary polymerization was used and the copolymerization conditions were changed as shown in Table 1. The results are shown in Table 1.

Example 24

Preliminary polymerization of propylene

Preliminary polymerization of propylene was performed in the same manner as in Example 23. The amount of preliminary polymerization was 10.2 g per g of catalyst component (a).

Gas-phase polymerization of ethylene and propylene

Into a 5-liter autoclave equipped with a stirrer, with the atmosphere therein completely replaced by nitrogen, were placed 200 mg of the above-mentioned catalyst component with preliminary polymerization, 0.17 mmol of TEAL, and 0.05 mmol of PES. Ethylene, propylene, and hydrogen were introduced into the system such that their molar ratio was kept at 3/6/1. Copolymerization of ethylene and propylene was performed at 60°C under a total pressure of 20 $kg/cm^2$. One hour later, the system was depressured and the resulting polymer was discharged.

The polymerization activity was 5.0 kg/g-catalyst component (a)-hour. The polymer thus obtained was in the form of spherical granules. It has the following characteristic properties.

Bulk density: 0.42 g/cm³
Melt index: 0.82 g/10 min
Ethylene content: 72 mol%
Heat of fusion: 5.8 cal/g

Comparative Example A

Preparation of catalyst component

In a 200-ml flask equipped with a dropping funnel and stirrer, with the atmosphere therein replaced by nitrogen gas, were placed 0.7 g of anhydrous magnesium chloride and 40 ml of tetrahydrofuran. Then, 0.46 g of titanium tetrachloride was added dropwise over 30 minutes at room temperature. The reactants were heated at 60°C for 30 minutes to make a uniform solution.

8 g of the $SiO_2$ used in Example 1 (calcined at 600°C for 5 hours in a nitrogen atmosphere) was mixed with 50 ml of n-hexane. To the resulting slurry was added dropwise 3.1 ml of 20% hexane solution of TEAL over 15 minutes. Nitrogen gas was blown into the mixture at 60°C for 4 hours to give a free-flowing powder.

The thus treated $SiO_2$ powder was added to the solution obtained as mentioned above, followed by stirring for 15 minutes. Nitrogen gas was blown at 60°C for 4 hours to yield a dry, powdery catalyst component (m) containing 4.1% of titanium.

Copolymerization of ethylene and propylene

Copolymerization of ethylene and propylene was performed in the same manner as in Example 1, except that the catalyst component (m) was used and the molar ratio of ethylene and propylene was 0.11. The results are shown in Table 1.

Table 1

| Example | Third component (a) | Al/(a) | Copolymerization temp. (°C) | Quantity of hydrogen used (ℓ) | Ethylene/propylene (molar ratio) | Polymerization activity (kg/g·cat·h) | Bulk density (g/cm³) | Melt index (g/10 min) | Ethylene content (mol%) | Heat of fusion (cal/g) | True density (g/cm³) |
|---|---|---|---|---|---|---|---|---|---|---|---|
| 1 | - | - | 40 | 2.0 | 0.14 | 14.3 | 0.36 | 0.26 | 69 | 3.6 | 0.878 |
| 2 | - | - | 40 | 2.0 | 0.17 | 13.6 | 0.37 | 0.31 | 77 | 4.3 | 0.887 |
| 3 | - | - | 40 | 2.0 | 0.06 | 9.9 | 0.33 | 1.3 | 50 | 1.5 | 0.870 |
| 4 | - | - | 40 | 2.0 | 0.03 | 12.0 | 0.34 | 0.85 | 36 | 0.7 | 0.873 |
| 5 | - | - | 20 | 2.0 | 0.10 | 4.0 | 0.36 | 0.10 | 73 | 3.9 | 0.883 |
| 6 | - | - | 60 | 2.0 | 0.17 | 34.2 | 0.33 | 0.31 | 69 | 2.8 | 0.876 |
| 7 | - | - | 40 | 2.0 | 0.14 | 8.7 | 0.37 | 0.60 | 71 | 3.3 | 0.878 |
| 8 | PES | 10 | 25 | 3.0 | 0.05 | 2.1 | 0.38 | 0.36 | 57 | 3.9 | 0.874 |
| 9 | PES | 10 | 40 | 2.0 | 0.23 | 6.4 | 0.41 | 0.07 | 80 | 9.2 | 0.897 |
| 10 | PES | 5 | 40 | 2.0 | 0.11 | 8.6 | 0.39 | 0.33 | 68 | 6.0 | 0.881 |
| 11 | PES | 20 | 40 | 2.0 | 0.14 | 5.2 | 0.40 | 0.24 | 71 | 7.2 | 0.883 |
| 12 | - | - | 40 | 2.0 | 0.20 | 9.1 | 0.35 | 0.42 | 75 | 3.8 | - |

Table 1 (continued)

| Example | Third component (a) | Al/(a) | Copolymerization temp. (°C) | Quantity of hydrogen used (ℓ) | Ethylene/propylene (molar ratio) | Polymerization activity (kg/g·cat·h) | Bulk density (g/cm³) | Melt index (g/10 min) | Ethylene content (mol%) | Heat of fusion (cal/g) | True density (g/cm³) |
|---|---|---|---|---|---|---|---|---|---|---|---|
| 13 | - | - | 40 | 2.0 | 0.18 | 23.0 | 0.30 | 1.4 | 56 | 0.5 | - |
| 14 | - | - | 40 | 2.0 | 0.26 | 18.3 | 0.32 | 1.6 | 66 | 1.2 | - |
| 15 | - | - | 40 | 2.0 | 0.16 | 10.2 | 0.33 | 0.78 | 71 | 4.1 | - |
| 16 | - | - | 40 | 2.0 | 0.18 | 12.1 | 0.38 | 0.33 | 80 | 5.1 | - |
| 17 | - | - | 40 | 2.0 | 0.12 | 13.8 | 0.36 | 0.29 | 65 | 3.1 | - |
| 18 | PES | 10 | 40 | 2.0 | 0.23 | 5.2 | 0.41 | 0.07 | 81 | 9.4 | - |
| 19 | - | - | 40 | 2.0 | 0.14 | 12.5 | 0.37 | 0.22 | 71 | 4.1 | - |
| 20 | PES | 10 | 40 | 2.0 | 0.22 | 4.9 | 0.39 | 0.12 | 76 | 8.6 | - |
| 21 | PES | 10 | 40 | 2.0 | 0.22 | 4.7 | 0.41 | 0.08 | 77 | 8.8 | - |
| 22 | - | - | 40 | 2.0 | 0.10 | 11.6 | 0.33 | 0.20 | 64 | 3.5 | - |
| 23 | PES | 10 | 60 | 2.0 | 0.16 | 17.2 | 0.37 | 0.41 | 74 | 6.9 | - |
| 24 | PES | 10 | 60 | 10 mol% | 0.50 | 5.0 | 0.42 | 0.82 | 72 | 5.8 | - |
| Compar. Example A | - | - | 40 | 2.0 | 0.11 | 2.5 | 0.19 | 0.94 | 69 | 0.3 | - |

Example 25

The procedure of Example 1, steps (i) through (iii) were repeated to form additional solid product (designated as solid component II) which was found to contain 36.6% of $SiO_2$, 5.1% of magnesium, and 38.5% of chlorine. It was also found to have a specific surface area of 257 $m^2/g$ and a pore volume of 0.76 $cm^3/g$.

Contacting with titanium tetrachloride

To the solid component II obtained in the above-mentioned step were added 15 ml of toluene and 40 ml of titanium tetrachloride, followed by reaction at 90° for 2 hours. The resulting solid product was washed with 60 ml of n-hexane eight times at room temperature, followed by drying under reduced pressure at room temperature for 1 hour. There was obtained 8.4 g of catalyst component (a) containing 53.1% of $SiO_2$, 7,3% of magnesium, 25.0% of chlorine, and 3.4% of titanium.

Copolymerization of ethylene and propylene

Into a 1.5-liter autoclave equipped with a stirrer, with the atmosphere therein replaced by nitrogen, were placed 800 ml of liquefied propylene, a glass ampoule containing 5 mg of catalyst component (a), and 1.0 mmol of triethyl aluminum (TEAL). While the contents are being heated to 40°C, 100 ml of hydrogen and ethylene sufficient to establish an ethylene-propylene molar ratio of 0.16 in the liquid phase were introduced under a pressure of 23.8 $kg/cm^2$. As the stirrer began to rotate, the glass ampoule was broken and copolymerization was initiated. During copolymerization, ethylene was supplied continuously so that the ethylene-propylene molar ratio was kept at 0.16. One hour later, the reaction system was depressured and the resulting polymer was discharged, followed by drying. The polymerization activity was 44.0 kg/g-catalyst component (a)-hour. The polymer thus obtained was in the form of spherical granules. It has the following characteristic properties.

Bulk density: 0.32 $g/cm^3$
Melt index: 1,0 g/10 min
True density: 0.862 $g/cm^3$
Ethylene content: 54 mol%

According to the differential thermal analysis, the polymer was found to have no Tm attributable to the ethylene chain. In addition, the polymer did not give a peak at 730 $cm^{-1}$ characteristic of crystalline polyethylene in IR spectrometry.

Examples 26 to 29

Copolymerization of ethylene and propylene was carried out in the same manner as in Example 25, except that the conditions of copolymerization were changed as shown in Table 2. The results are shown in Table 2.

Example 30

Copolymerization of ethylene and propylene was carried out in the same manner as in Example 25, except that TEAL was replaced by triisobutyl aluminum (TIBAL). The results are shown in Table 2.

Examples 31 and 32

Preparation of catalyst component

Catalyst components (b) and (c) containing titanium as shown below were prepared in the same manner as in Example 25, except that the tetraethoxysilane was replaced by the hydrocarbyloxy group-containing compound shown below.

| Example No. | Catalyst component | Hydrocarbyloxy group-containing compound | Titanium content (%) |
|---|---|---|---|
| 31 | (b) | $HC(OC_2H_5)_3$ | 2.8 |
| 32 | (c) | $C_6H_5Si(OC_2H_5)_3$ | 2.5 |

Copolymerization of ethylene and propylene

Copolymerization of ethylene and propylene was performed in the same manner as in Example 25, except that the catalyst components obtained as mentioned above were used and the conditions of copolymerization were changed as shown in Table 2. The results are shown in Table 2.

Examples 33 and 34

Preparation of catalyst component

Catalyst component (d) was prepared in the similar manner to that in Example 25. The solid component II was contacted with toluene and titanium tetrachloride, and the supernatant liquid was removed by decantation. The solid product was washed with 60 ml of tolune for 15 minutes at 90°C. Washing with toluene was repeated. 15 ml of toluene and 40 ml of titanium tetrachloride were added, followed by reaction at 90°C for 2 hours. Finally, the reaction product was washed with n-hexane and dried.

Copolymerization of ethylene and propylene

Copolymerization of ethylene and propylene was performed in the same manner as in Example 25, except that the catalyst component (d) obtained as mentioned above was used and the conditions of copolymerization were changed as shown in Table 2. The results are shown in Table 2.

Example 35

Preparation of catalyst component

Catalyst component (e) containing 3.6% of titanium was prepared in the same manner as in Example 25, except that the $SiO_2$ was replaced by $Al_2O_3$ formed by calcination in a nitrogen stream at 200°C for 2 hours and subsequently at 700°C for 5 hours.

Copolymerization of ethylene and propylene

Copolymerization of ethylene and propylene was performed in the same manner as in Example 25, except that the catalyst component (e) obtained as mentioned above was used and the conditions of copolymerization were changed as shown in Table 2. The results are shown in Table 2.

Examples 36 and 37

Preparation of catalyst component

Catalyst components (f) and (g) were prepared in the same manner as in Example 25, except that the BEM was replaced by the organo-Mg shown below.

| Example No. | Catalyst component | Organo-Mg | Titanium content (%) |
|---|---|---|---|
| 36 | (f) | di-n-hexyl Mg | 3.2 |
| 37 | (g) | di-n-butyl Mg (7.5 mol)–TEAL (1.0 mol) complex | 3.3 |

Copolymerization of ethylene and propylene

Copolymerization of ethylene and propylene was performed in the same manner as in Example 25, except that the catalyst components obtained as mentioned above were used and the conditions of copolymerization were changed as shown in Table 2. The results are shown in Table 2.

Examples 38 and 39

Preparation of catalyst components

Catalyst components (h) and (i) were prepared in the same manner as in Example 25, except that the 2,2,2-trichloroethanol was replaced by the halogen-containing alcohol shown below.

| Example No. | Catalyst component | Halogen-containing alcohol | Titanium content (%) |
|---|---|---|---|
| 38 | (h) | 2-chloroethanol | 3.4 |
| 39 | (i) | p-chlorophenol | 3.3 |

Copolymerization of ethylene and propylene

Copolymerization of ethylene and propylene was performed in the same manner as in Example 25, except that the catalyst components obtained as mentioned above were used and the conditions of copolymerization were changed as shown in Table 2. The results are shown in Table 2.

Exemple 40

Gas-phase polymerization of ethylene and propylene

Into a 5-liter autoclave equipped with a stirrer, with the atmosphere therein completely replaced by nitrogen, were placed 50 g of the same $SiO_2$ as used in the preparation of catalyst component in Example 25. (Prior to use, the $SiO_2$, was calcined at 200°C for 2 hours and subsequently at 700°C for 5 hours under a nitrogen stream.) To the autoclave were further added 20 mg of catalyst component (a) obtained in Example 25 and 0.7 mmol of TEAL. Ethylene, propylene, and hydrogen were introduced into the system such that their molar ratio was kept at 40/58/2. Copolymerization of ethylene and propylene was performed at 40°C under a total pressure of 20 kg/cm$^2$. One hour later, the system was depressured and the resulting polymer was discharged and placed in acetone to for the separation of $SiO_2$ from the polymer. The polymerization activity was 8.3 kg/g-catalyst component (a)-hour. The polymer thus obtained was in the form of spherical granules. It has the following characteristic properties.

Bulk density: 0.34 g/cm$^3$
Melt index: 0.62 g/10 min
Ethylene content: 68 mol%

According to the differential thermal analysis, the polymer was found to have no Tm attributable to the ethylene chain. In addition, the polymer did not give a peak at 730 cm$^{-1}$ characteristic of crystalline polyethylene in IR spectrometry.

Comparative Example B

Preparation of catalyst component

In a 200-ml flask equipped with a dropping funnel and stirrer, with the atmosphere therein replaced by nitrogen was, were placed 0.7 g of anhydrous magnesium chloride and 40 ml of tetrahydrofuran. Then, 0.46 g of titanium tetrachloride was added dropwise over 30 minutes at room temperature. The reactants were heated at 60°C for 30 minutes to make a uniform solution.

8 g of the $SiO_2$ used in Example 25 (calcined at 600°C for 5 hours in a nitrogen atmosphere) was mixed with 50 ml of n-hexane. To the resulting slurry was added dropwise 3.1 ml of 20% hexane solution of TEAL over 15 minutes. Nitrogen gas was blown into the mixture at 60°C for 4 hours to give a free-flowing powder.

The thus treated $SiO_2$ powder was added to the solution obtained as mentioned above, followed by stirring for 15 minutes. Nitrogen gas was blown at 60°C for 4 hours to yield a dry, powdery catalyst component (j) containing 4.1% of titanium.

Copolymerization of ethylene and propylene

Copolymerization of ethylene and propylene was performed in the same manner as in Example 25, except that the catalyst component (j) was used and the the conditions of copolymerization was changed as shown in Table 2. The results are shown in Table 2.

Table 2

| Example | Copolymerization temp. (°C) | Quantity of hydrogen used (ℓ) | Ethylene/propylene (molar ratio) | Polymerization activity (kg/g·cat·h) | Bulk density (g/cm³) | Melt index (g/10 min) | Ethylene content (mol%) | Heat of fusion (cal/g) | True density (g/cm³) |
|---|---|---|---|---|---|---|---|---|---|
| 25 | 40 | 0.1 | 0.16 | 44.0 | 0.32 | 1.0 | 54 | ~0 | 0.862 |
| 26 | 40 | 0.05 | 0.26 | 51.5 | 0.31 | 0.48 | 68 | ~0 | 0.866 |
| 27 | 40 | 0.05 | 0.07 | 48.1 | 0.30 | 0.71 | 34 | ~0 | 0.868 |
| 28 | 20 | 0.1 | 0.02 | 19.0 | 0.34 | 0.22 | 59 | ~0 | 0.864 |
| 29 | 20 | 0.1 | 0.02 | 21.3 | 0.37 | 0.14 | 70 | 0.1 | 0.870 |
| 30 | 40 | 0.1 | 0.20 | 38.9 | 0.33 | 0.92 | 61 | ~0 | 0.865 |
| 31 | 40 | 0.05 | 0.26 | 41.4 | 0.32 | 0.41 | 67 | ~0 | - |
| 32 | 40 | 0.05 | 0.26 | 35.3 | 0.34 | 0.14 | 71 | 0.6 | - |
| 33 | 40 | 2.0 | 0.24 | 16.0 | 0.33 | 1.3 | 67 | 0.4 | - |
| 34 | 20 | 2.0 | 0.22 | 5.8 | 0.37 | 1.6 | 74 | 0.9 | - |
| 35 | 40 | 0.05 | 0.26 | 41.3 | 0.29 | 0.39 | 70 | 0.2 | - |
| 36 | 40 | 0.05 | 0.16 | 47.5 | 0.31 | 0.61 | 50 | ~0 | - |
| 37 | 40 | 0.05 | 0.26 | 50.1 | 0.31 | 0.54 | 65 | ~0 | - |
| 38 | 40 | 0.05 | 0.10 | 43.7 | 0.30 | 0.78 | 43 | ~0 | - |
| 39 | 40 | 0.05 | 0.20 | 43.6 | 0.30 | 0.52 | 61 | ~0 | - |
| Comparative Example B | 40 | 2.0 | 0.11 | 2.5 | 0.19 | 0.94 | 69 | 0.3 | - |

Example 41

The procedure of Example 1, steps (i) through (iii) was repeated to form additional solid product (designated as solid component III) which was found to contain 36.6% of $SiO_2$, 5.1% of magnesium, and 38.5% of chlorine. It was also found to have a specific surface area of 257 $m^2/g$ and a pore volume of 0.76 $cm^3/g$.

Contacting with titanium tetrachloride

To the solid component III obtained in the above-mentioned step were added 15 ml of toluene and 40 ml of titanium tetrachloride, followed by reaction at 90°C for 2 hours. The resulting solid product was washed with 60 ml of n-hexane eight times at room temperature, followed by drying under reduced pressure at room temperature for 1 hour. There was obtained 8.4 g of a titanium catalyst component containing 53.1% of $SiO_2$, 7.6% of magnesium, 24,9% of chlorine, and 3.3% of titanium.

Preliminary polymerization of ethylene

In a 200-ml flask equipped with a stirrer, with the atmosphere therein completely replaced by nitrogen, was placed 50 ml of heptane. To the flask were further added 1.0 g of the titanium catalyst component prepared as mentioned above and 0.1 mmol of triethyl aluminum (TEAL). Ethylene was supplied to initiate the polymerization of ethylene under normal pressure. 30 minutes later, the supply of ethylene was suspended and the liquid phase was removed. The solid phase was washed five times with 50 ml of n-hexane, followed by drying at room temperature. Thus there was obtained catalyst component (a) containing 1.3 g of polyethylene per g of the titanium catalyst component.

Copolymerization of ethylene and propylene

Into a 1.5-liter autoclave equipped with a stirrer, with the atmosphere therein replaced by nitrogen, were placed 800 ml of liquefied propylene, a glass ampoule containing 5 mg of catalyst component (a), and 1.0 mmol of triethyl aluminum (TEAL). While the contents are being heated to 60°C, 100 ml of hydrogen and ethylene sufficient to establish an ethylene-propylene molar ratio of 0.15 in the liquid phase were introduced under a pressure of 33.2 $kg/cm^2$. As the stirrer began to rotate, the glass ampoule was broken and copolymerization was initiated. During copolymerization, ethylene was supplied continuously so that the ethylene-propylene molar ratio was kept at 0.15. One hour later, the reaction system was depressured and the resulting polymer was discharged, followed by drying. The polymerization activity was 156.8 kg/g-catalyst component (a)-hour. The polymer thus obtained was in the form of spherical granules. It has the following characteristic properties.

Bulk density: 0.33 $g/cm^3$
Melt index: 1.1 g/10 min
True density: 0.863 $g/cm^3$
Ethylene content: 57 mol%

According to the differential thermal analysis, the polymer was found to have no Tm attributable to the ethylene chain. In addition, the polymer did not give a peak at 730 $cm^{-1}$ characteristic of crystalline polyethylene in IR spectrometry.

Example 42

Copolymerization of ethylene and propylene was carried out in the same manner as in Example 41, except that the conditions of copolymerization were changed as shown in Table 3. The results are shown in Table 3.

Examples 43 to 46

Preliminary polymerization of ethylene

Preliminary polymerization of ethylene was performed in the same manner as in Example 41, except that 0.5 g of the titanium catalyst component and 0.5 mmol of TEAL were used and the polymerization time was changed to 1.5 hours. There was obtained catalyst component (b) containing polyethylene in an amount of 4.2 g per g of titanium catalyst component.

Copolymerization of ethylene and propylene

Copolymerization of ethylene and propylene was carried out in the same manner as in Example 41, except that the catalyst component (b) obtained as mentioned above was used and the conditions of copolymerization were changed as shown in Table 3. The results are shown in Table 3.

Example 47

Preliminary polymerization of ethylene

Preliminary polymerization of ethylene was performed in the same manner as in Example 41,except that the polymerization pressure was changed to 4 kg/cm$^2$ and the polymerization time was changed to 1 hour. There was obtained catalyst component (c) containing polyethylene in an amount of 9.6 g per g of titanium catalyst component.

Copolymerization of ethylene and propylene

Copolymerization of ethylene and propylene was carried out in the same manner as in Example 41,except that the catlyst component (c) obtained as mentioned above was used and the conditions of copolymerization were changed as shown in Table 3. The results are shown in Table 3.

Example 48

Preparation of catalyst component

A titanium catalyst component containing 3.7% of titanium was prepared in the same manner as in Example 41,except that the $SiO_2$ was replaced by $Al_2O_3$ formed by calcination in a nitrogen stream at 200°C for 2 hours and subsequently at 700°C for 5 hours. Then, there was obtained catalyst component (d) containing polyethylene in an amount of 2.1 g per g of titanium catalyst component in the same manner as in Example 41.

Copolymerization of ethylene and propylene

Copolymerization of ethylene and propylene was performed in the same manner as in Example 41, except that the catalyst component (d) obtained as mentioned above was used and the conditions of copolymerization were changed as shown in Table 3. The results are shown in Table 3.

Examples 49 and 50

Preparation of catalyst component

Titanium catalyst components containing titanium as shown below were prepared in the same manner as in Example 41, except that BEM was replaced by an organo-Mg shown below. Then, catalyst components (e) and (f) containing polyethylene as shown below were prepared in the same manner as in Example 41 from the titanium catalyst component.

| Example No. | Catalyst component | Organo-Mg | Titanium content (%) | Polyethylene content (g/g-cat.) |
|---|---|---|---|---|
| 49 | (e) | di-n-hexyl Mg | 3.3 | 4.1 |
| 50 | (f) | di-n-butyl Mg (7.5 mol)-TEAL (1.0 mol) complex | 3.3 | 4.3 |

Copolymerization of ethylene and propylene

Copolymerization of ethylene and propylene was performed in the same manner as in Example 41, except that the catalyst components obtained as mentioned above were used and the conditions of copolymerization were changed as shown in Table 3. The results are shown in Table 3.

Examples 51 and 52

Preparation of catalyst components

Titanium catalyst components containing titanium as shown below were prepared in the same manner as in Example 41, except that the 2,2,2-trichloroethanol was replaced by the halogen-containing alcohol shown below. Then, catalyst components (g) and (h) containing polyethylene as shown below were prepared in the same manner as in Example 41.

| Example No. | Catalyst component | Halogen-containing alcohol | Titanium content (%) | Polyethylene content (g/g-cat.) |
|---|---|---|---|---|
| 51 | (g) | 2-chloroethanol | 3.5 | 3.6 |
| 52 | (h) | p-chlorophenol | 3.2 | 3.1 |

Copolymerization of ethylene and propylene

Copolymerization of ethylene and propylene was performed in the same manner as in Example 41, except that the catalyst components obtained as mentioned above were used and the conditions of copolymerization were changed as shown in Table 3. The results are shown in Table 3.

Examples 53 and 54

Preparation of catalyst component

Titanium catalyst components containing titanium as shown below were prepared in the same manner as in Example 41, except that the tetraethoxysilane was replaced by the hydrocarbyloxy group-containing compound shown below. Then, catalyst components (i) and (j) containing polyethylene as shown below were prepared in the same manner as in Example 41.

Example 41.

| Example No. | Catalyst component | Hydrocarbyloxy group-containing compound | Titanium content (%) | Polyethylene content (g/g-cat) |
|---|---|---|---|---|
| 53 | (i) | $HC(OC_2H_5)_3$ | 3.2 | 3.7 |
| 54 | (j) | $C_6H_5Si(OC_2H_5)_3$ | 3.4 | 3.3 |

Copolymerization of ethylene and propylene

Copolymerization of ethylene and propylene was performed in the same manner as in Example 41, except that the catalyst components obtained as mentioned above were used and the conditions of copolymerization were changed as shown in Table 3. The results are shown in Table 3.

Example 55

Gas-phase polymerization of ethylene and propylene

Into a 5-liter autoclave equipped with a stirrer, with the atmosphere therein completely replaced by nitrogen, were placed 200 mg of catalyst component (c) obtained in Example 47 and 1.0 mmol of TEAL. Ethylene, propylene, and hydrogen were introduced into the system such that their molar ratio was kept at 40/58/2. Copolymerization of ethylene and propylene was performed at 60°C under a total pressure of 20 kg/cm$^2$. One hour later, the system was depressured and the resulting polymer was discharged.

The polymerization activity was 38.1 kg/g-catalyst component (c)-hour. The polymer thus obtained was in the form of spherical granules. It has the following characteristic properties.

Bulk density: 0.41 g/cm$^3$
Melt index: 0.43 g/10 min
Ethylene content: 68 mol%

According to the differential thermal analysis, the polymer was found to have no Tm attributable to the ethylene chain. In addition, the polymer did not give a peak at 730 cm$^{-1}$ characteristic of crystalline polyethylene in IR spectrometry.

Cooperative Example C

Preparation of catalyst component

In a 200-ml flask equipped with a dropping funnel and stirrer, with the atmosphere therein replaced by nitrogen gas, were placed 0.7 g of anhydrous magnesium chloride and 40 ml of tetrahydrofuran. Then, 0.46 g of titanium tetrachloride was added dropwise over 30 minutes at room temperature. The reactants were heated at 60°C for 30 minutes to make a uniform solution.

8 g of the $SiO_2$ used in Example 41 (calcined at 600°C for 5 hours in a nitrogen atmosphere) was mixed with 50 ml of n-hexane. To the resulting slurry was added dropwise 3.1 ml of 20% hexane solution of TEAL over 15 minutes. Nitrogen gas was blown into the mixture at 60°C for 4 hours to give a free-flowing powder.

The thus treated $SiO_2$ powder was added to the solution obtained as mentioned above, followed by stirring for 15 minutes. Nitrogen gas was blown at 60°C for 4 hours to yield a dry, powdery catalyst component (k) containing 4.1% of titanium.

Copolymerization of ethylene and propylene

Copolymerization of ethylene and propylene was performed in the same manner as in Example 41, except that the catalyst component (k) was used and the the conditions of copolymerization was changed as shown in Table 3. The results are shown in Table 3.

Table 3

| Example | Copolymerization temp. (°C) | Quantity of hydrogen used (ℓ) | Ethylene/propylene (molar ratio) | Polymerization activity (kg/g·cat·h) | Bulk density (g/cm³) | Melt index (g/10 min) | Ethylene content (mol%) | Heat of fusion (cal/g) | True density (g/cm³) |
|---|---|---|---|---|---|---|---|---|---|
| 41 | 60 | 0.1 | 0.24 | 156.8 | 0.33 | 1.1 | 57 | ~0 | 0.863 |
| 42 | 40 | 0.1 | 0.18 | 48.0 | 0.39 | 0.45 | 58 | ~0 | 0.863 |
| 43 | 60 | 0.02 | 0.28 | 147.5 | 0.35 | 0.47 | 63 | ~0 | 0.866 |
| 44 | 40 | 0.1 | 0.31 | 61.0 | 0.44 | 0.27 | 71 | 0.1 | 0.873 |
| 45 | 40 | 0.1 | 0.22 | 59.0 | 0.41 | 0.38 | 62 | ~0 | 0.864 |
| 46 | 40 | 0.1 | 0.12 | 15.6 | 0.38 | 0.13 | 55 | ~0 | 0.862 |
| 47 | 20 | 0.1 | 0.33 | 55.6 | 0.45 | 0.31 | 72 | 0.2 | 0.872 |
| 48 | 40 | 0.1 | 0.26 | 46.2 | 0.35 | 0.33 | 68 | 0.3 | - |
| 49 | 40 | 0.1 | 0.26 | 51.8 | 0.41 | 0.36 | 66 | ~0 | - |
| 50 | 40 | 0.1 | 0.20 | 53.6 | 0.41 | 0.29 | 59 | ~0 | - |
| 51 | 40 | 0.1 | 0.22 | 51.1 | 0.40 | 0.53 | 64 | 0.1 | - |
| 52 | 40 | 0.1 | 0.16 | 40.8 | 0.38 | 0.41 | 55 | ~0 | - |
| 53 | 40 | 0.1 | 0.20 | 47.9 | 0.40 | 0.67 | 62 | ~0 | - |
| 54 | 40 | 0.1 | 0.26 | 38.1 | 0.42 | 0.38 | 73 | 0.7 | - |
| Comparative Example C | 40 | 0.1 | 0.12 | 3.1 | 0.21 | 0.03 | 71 | 0.7 | - |

## Claims

1. A process for producing an ethylene-propylene copolymer rubber containing 15-90 mol% of ethylene, said process comprising copolymerizing ethylene and propylene in the presence of a polymerization catalyst composed of a catalyst component and an organoaluminum compound, said catalyst component being obtained by contacting (A) a metal oxide, (B) a dihydrocarbyl magnesium, and (C) a hydrocarbyloxy group-containing compound with one another to form a first contact product, contacting said first contact product with (D) a halogen-containing alcohol to form a second contact product, and finally contacting said second contact product with (E) a titanium compound to form a titanium-containing catalyst component.

2. The process according to claim 1 wherein said second contact product is additionally contacted with an electron donor compound.

3. The process according to claim 1 wherein said titanium-containing catalyst component is subjected to a prepolymerization in the presence of an olefin and an organoaluminum compound to form a prepolymer-titanium catalyst component containing from 0.1 to 100 g of olefin polymer per gram of said titanium-containing catalyst.

4. A process according to claim 1, 2 or 3 wherein copolymerisation is conducted at from 0°C to 80°C.

5. A process according to claim 1, 2, 3 or 4 wherein copolymerisation is conducted at a pressure up to 60 atm.

6. A process according to any one of the preceding claims wherein copolymerisation is conducted in the bulk phase in a propylene medium.

7. A process according to claim 6 wherein the ethylene/propylene molar ratio is from 0.01 to 1.0 (in liquid phase).

8. A process according to any one of claims 1 to 5 wherein copolymerisation is conducted in the gas phase.

9. A process according to claim 8 wherein the ethylene/propylene molar ratio is from 0.03 to 3.0.

10. A process according to any one of the preceding claim which excludes the step of removing catalyst from the copolymer product mixture.

## Patentansprüche

1. Ein Verfahren zur Herstellung eines 15 bis 90 Mol.-% Ethylen enthaltenden Ethylen-Propylencopolymerkautschuks umfaßt die Copolymerisation von Ethylen und Propylen in der Gegenwart eines Polymerisationskatalysators, der aus einer Katalysatorkomponente und einer Organoaluminiumverbindung zusammengesetzt ist, wobei die Katalysatorkomponente erhalten wird durch Kontaktieren (A) eines Metalloxids, (B) mit einem Dihydrocarbylmagnesium und (C) mit einer eine Hydrocarboxylgruppe enthaltenden Verbindung zur Bildung eines ersten Kontaktierungsprodukts, Kontaktieren des ersten Kontaktierungsprodukts mit (D) einem Halogen enthaltenden Alkohol zur Bildung eines zweiten Kontaktierungsprodukts und schließlich das Kontaktieren des zweiten Kontaktierungsprodukts mit (E) einer Titanverbindung zur Bildung einer Titan enthaltenden Katalysatorkomponente.

2. Verfahren nach Anspruch 1, worin das zweite Kontaktierungsprodukt zusätzlich mit einer Elektronendonatorenverbindung kontaktiert wird.

3. Verfahren nach Anspruch 1, worin die titanhaltige Katalysatorkomponente einer Vorpolymerisation in Gegenwart eines Olefins und einer Organoaluminiumverbindung zur Bildung einer Vorpolymer-Titan-Katalysatorkomponente, die 0,1 bis 100 g Olefinpolymeres pro Gramm dieses titanhaltigen Katalysators enthält, unterzogen wird.

4. Verfahren nach einem der Ansprüche 1, 2 oder 3, worin die Copolymerisation bei 0°C bis 80°C durchgeführt wird.

5. Verfahren nach einem der Ansprüche 1, 2, 3 oder 4, worin die Copolymerisation bei einem Druck von bis zu 60 Atmosphären durchgeführt wird.

6. Verfahren nach einem der vorhergehenden Ansprüche, worin die Copolymerisation in der Massephase in einem Propylenmedium durchgeführt wird.

7. Verfahren nach Anspruch 6, worin das Ethylen/Propylen-Molverhältnis 0,01 bis 1,0 (in der Flüssigphase) beträgt.

8. Verfahren nach einem der Ansprüche 1 bis 5, worin die Copolymerisation in der Gasphase durchgeführt wird.

9. Verfahren nach Anspruch 8, worin das Ethylen/Propylen-Molverhältnis 0,03 bis 3,0 beträgt.

10. Verfahren nach einem der vorhergehenden Ansprüche, das die Stufe der Katalysatorentfernung aus dem Copolymerproduktgemisch ausschließt.

## Revendications

1. Procédé de production d'un caoutchouc copolymère éthylène-propylène contenant 15 à 90 moles% d'éthylène, ledit procédé consistant à copolymériser de l'éthylène et du propylène en présence d'un catalyseur de polymérisation constitué d'un composant de catalyseur et d'un composé organique d'aluminium,

ledit composant de catalyseur étant obtenu par mise en contact (A) d'un oxyde métallique, (b) d'un dihydrocarbylmagnésium et (C) d'un composé contenant des groupes hydrocarbyloxy les uns avec les autres pour former un premier produit de contact, à faire entrer ce premier produit de contact en contact avec (D) un alcool halogéné pour former un second produit de contact, et finalement à faire entrer ce second produit de contact en contact avec (E) un composé de titane pour former un composant de catalyseur contenant du titane.

2. Procédé suivant la revendication 1, dans lequel le second produit de contact est en outre mis en contact avec un composé donneur d'électrons.

3. Procédé suivant la revendication 1, dans lequel le composant de catalyseur contenant du titane est soumis à une prépolymérisation en présence d'une oléfine et d'un composé organique d'aluminium pour former un composant de catalyseur prépolymère-titane contenant 0,1 à 100 g de polymère d'oléfine par gramme de catalyseur contenant du titane.

4. Procédé suivant la revendication 1, 2 ou 3, dans lequel la copolymérisation est conduite à une température de 0 à 80°C.

5. Procédé suivant la revendication 1, 2, 3 ou 4, dans lequel la copolymérisation est conduite à une pression allant jusqu'à 60 atmosphères.

6. Procédé suivant l'une quelconque des revendications précédentes, dans lequel la copolymérisation est conduite en masse dans un milieu propylénique.

7. Procédé suivant la revendication 6, dans lequel le rapport molaire éthylène/propylène va de 0,01 à 1,0 (en phase liquide).

8. Procédé suivant l'une quelconque des revendications 1 à 5, dans lequel la copolymérisation est conduite en phase gazeuse.

9. Procédé suivant la revendication 8, dans lequel le rapport molaire éthylène/propylène va de 0,01 à 3,0.

10. Procédé suivant l'une quelconque des revendications précédentes, qui exclut l'étape d'élimination du catalyseur du mélange de produit copolymérique.

Fig. 1

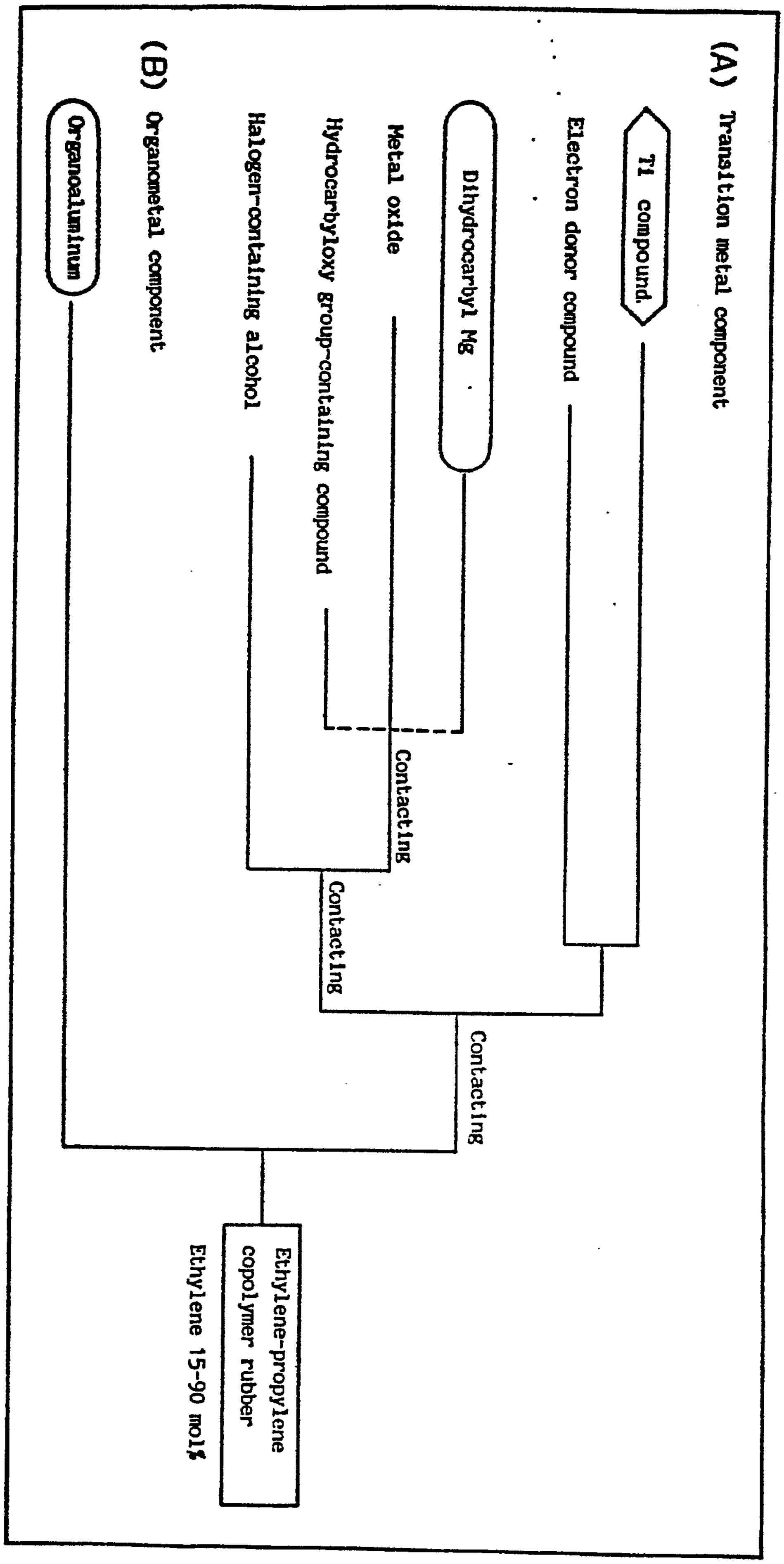
(A) Transition metal component
Ti compound
Electron donor compound
Dihydrocarbyl Mg
Metal oxide
Hydrocarbyloxy group-containing compound
Halogen-containing alcohol
Contacting
Contacting
Contacting
(B) Organometal component
Organoaluminum
Contacting
Ethylene-propylene copolymer rubber
Ethylene 15-90 mol%

Fig. 2

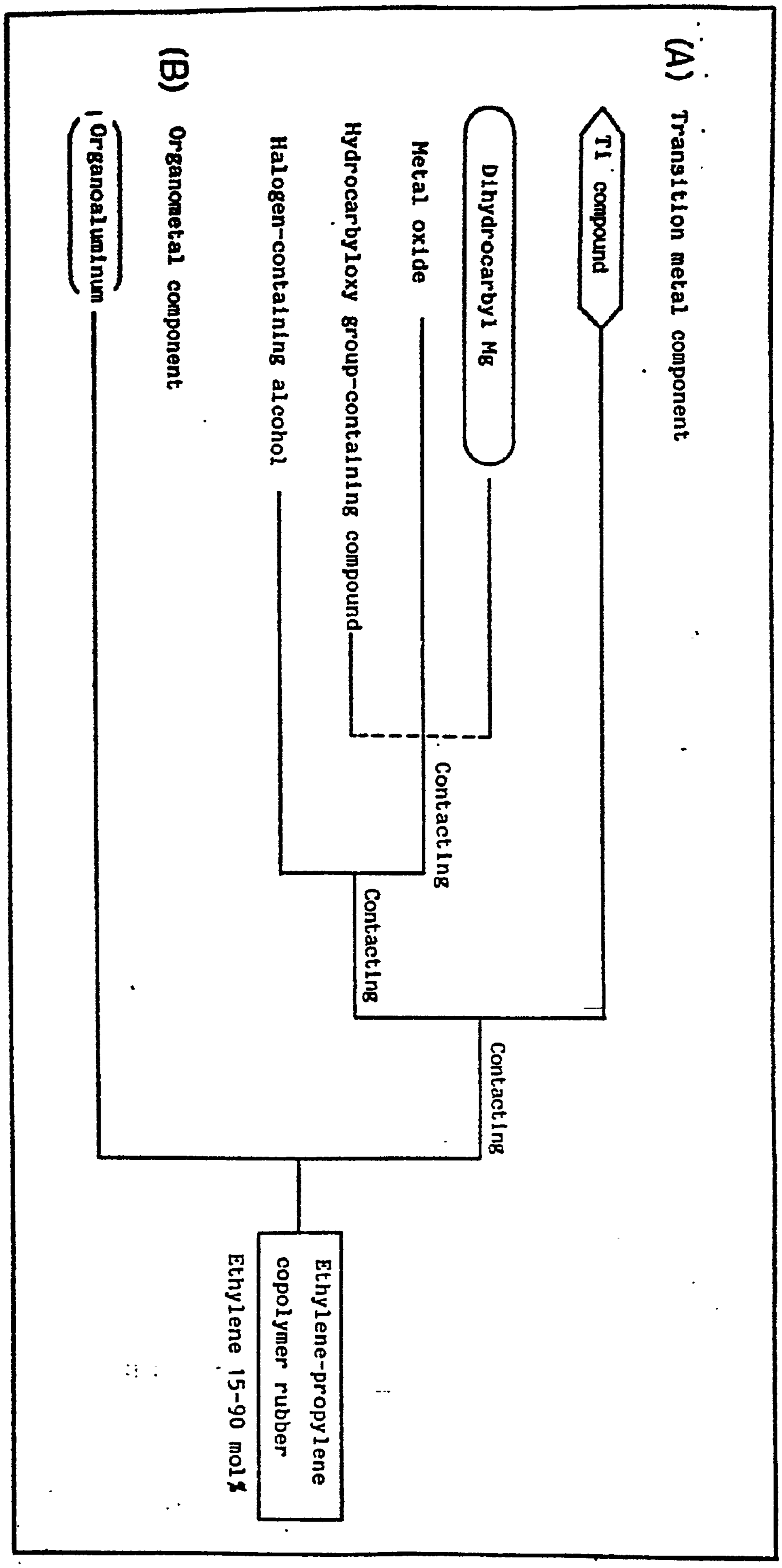

(A) Transition metal component
Ti compound
Dihydrocarbyl Mg
Metal oxide
Hydrocarbyloxy group-containing compound
Halogen-containing alcohol
Contacting
Contacting
Contacting
(B) Organometal component
Organoaluminum
Ethylene-propylene copolymer rubber
Ethylene 15-90 mol%

Fig. 3

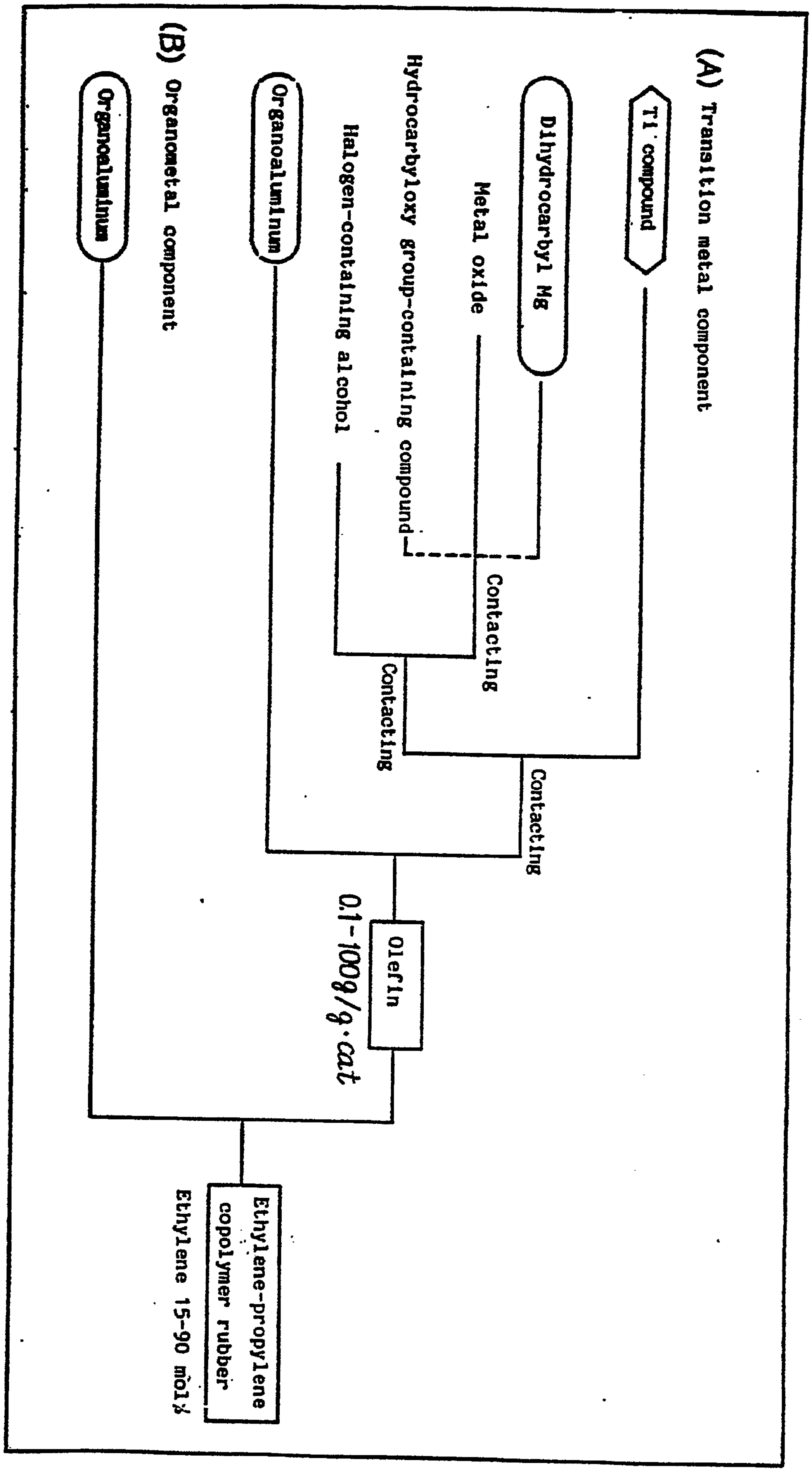
(A) Transition metal component
Ti compound
Dihydrocarbyl Mg
Metal oxide
Hydrocarbyloxy group-containing compound
Halogen-containing alcohol
Organoaluminum
Contacting
Contacting
Contacting
Contacting
Olefin
0.1-100g/g·cat
(B) Organometal component
Organoaluminum
Ethylene-propylene copolymer rubber
Ethylene 15-90 mol%